# EUROPEAN PATENT SPECIFICATION

(11) **EP 2 004 565 B1**
(45) Date of publication and mention of the grant of the patent: **09.01.2013**
(21) Application number: 07754020.1
(22) Date of filing: 23.03.2007
(51) Int. Cl.: C04B 7/14, F23G 5/02

(54) **METHOD AND PLANT FOR PROCESSING WASTE**
VERFAHREN UND ANLAGE ZUR ABFALLVERWERTUNG
PROCEDE ET INSTALLATION DE TRAITEMENT DE DECHETS

(30) Priority: 30.03.2006 US 393195
(43) Date of publication of application: 24.12.2008
(73) Proprietor: Rabiner, Yuriy, New York, NY 10033 (US)
(72) Inventor: Rabiner, Yuriy, New York, NY 10033 (US)
(74) Representative: Hentrich, Swen
(86) International application number: PCT/US2007/007443
(87) International publication number: WO 2007/126746

(56) References cited:
- US-B1- 6 202 577

## Description

### FIELD OF THE INVENTION

The present invention relates a method and a plant for processing waste, including solid municipal or like refuse and also of the refuse together with oil-industry wastes (oil sludge, acid tars, etc.), soil polluted by pesticides and oil products, waste products of electronics, used tires, all kinds of plastics, sewage sludge of the city waste water treatment plants, the polluted ground sediment of reservoirs, biologically polluted waste products of hospitals, etc.

### BACKGROUND OF THE INVENTION

Problem of pollution of cities by waste products of the its vital activity and its solution appeared extremely complex scientific - technical and social - economic task. Special specificity here is shown in a possible concentration in these waste products practically all variety of substances and the materials meeting in the nature and is artifcial by created by the human, and also in continuous growth of their quantity.

Economically the most attractive could be sorting of refuse including on the automated sorting complexes with the subsequent returning of a significant part of components into manufacture. However, it extremely laborious, epidemically and toxically dangerous process allowing to sort no more than 30 % of refuse, as its big part is impossible to separate (Katys M. Dumps of Household Waste Products and Incinerate Factories - Sources of Dioxins. 25-11.2002 20:21/www. svoboda.org).

Experience of Germany has shown, that recycling is economically expedient only for such materials as ferrous metals, aluminum, glass depending on local conditions, probably, a paper and is completely unacceptable for plastic, packing materials, newspapers, waste products of electronics, linoleum, etc. (Steven P. Reynolds. The German Recycling Experiment and its lessons for United States Policy. Villanova Environmental Law Journal. Vol. V1, 1995, Number 1.). In the USA 30.6 % of municipal solid waste are recovered due to recycling (23.5 %) and composting (7.1 %) (U.S. EPA. Municipal Solid Waste in the United States. 2003 Facts and Figures.). It means, that approximately 70 % of solid waste should be processed by a different way.

The emergency has developed all over the world and with utilization of oil containing waste products. Till now the comprehensible decision of the challenge - clearing of the ground repeatedly polluted with mineral oil (for example, a ground of territories of the gas stations, seaports, railway depots, tank farms, etc.), recycling of acid tars (waste products of sulfuric purification of some mineral oils, for example, the lubricant oils, containing 15 - 70 % of the sulfuric acid dissolved in water), utilization of ground sediments of oil tanks, ponds - sediment bowls, earthen sludge barns, representing a solid phase, containing paraffins, asphalt-resinous substances, sulfur, sand, clay and other mechanical impurity, and also heavy metals - lead, cadmium, zinc, etc is not found. Such refuse are offered to be processed on units of thermal neutralization where as a result of pyrolysis receive dry carbon containing material - raw material for manufacture of building materials and asphalt concrete mixes, and also the condensate and the gas used as fuel in these units (Zharov O.A., etc. Modern Russian Technologies. Vol. 2. Technologies and the Equipment for Processing and Recycling of Oil containing Waste Products and Oil Sludges. The Directory. Ecoline. Yaroslavl, 2003). It is necessary to note that such solution of a problem is not satisfactory as the solid rests of pyrolysis contain heavy metals and, hence, are not suitable for industrial use and a burial place also demand. Besides extraction oil from ground deposits it is inexpedient in connection with high expenses and insignificant quantity of an oil phase: on the average 5 - 8 %. Most the rational way of the solution of a problem of utilization of the oil sludge is observed at joint process of pyrolysis with municipal solid waste (Muzipov H.N., Nalobova E.V., Shantarin V.D. Utilization of Ground Sediment of Oil Tanks without Waste 21.01.2003 11:29/ www.promeco.hl.ru). Thus, however, the questions associated to protection of an environment from pollution by heavy metals, polychlorinated dibenzodioxins, -furanes and -biphenyls also are not solved.

Now in the world practice some technologies operate joint thermal processing of municipal solid waste and sludge deposits of the sewage formed on city sewage purification plants. Thus, their joint burning in furnaces of various designs with preliminary drying deposits and obligatory return of chimney gases after dryings on deodorization in a furnace is provided (U.S. Pat. Nos. 4,753,181, 5,630,366, 6,412,428 and Kremer A.I, About Prospects of Joint Thermal Processing of Municipal Solid Waste and Deposits of Sewage. 26.11.2002 22:38/ www.gke.wl.dvgu.ru). In connection with the raised content of heavy metals in sludge deposits of sewage all these technologies result in reception of extremely dangerous slag and ashes which demand a burial place. Besides chlororganic compounds contained in solid waste result in environmental contamination by polychlorinated dibenzodioxins, -furanes and -biphenyls.

Now in the world wide practice it is realized more than ten technologies of processings solid municipal and industrial wastes. The most widespread among them are thermal ways: burning, pyrolysis and gasification.

Burning cannot be considered as economically reasonable or saving resources method as many organic substances which could to be used, are burnt with additional consumption of fuel - up to 265 π (70 gal) on ton of burnt solid waste (Clarke, M.J., DeKadt, M., and Saphire D. Burning Garbage in the USA. Practice vs. State of Art. Inform Inc. 1991. p. 146-147). Besides existing and offered to use plants for refuse incineration have a lot of lacks the main thing from which is that they at work form secondary extremely toxic waste products (polychlorinated dibenzodioxins, -furanes, and - biphenyls) exude together with heavy metals in an environment with chimney gases, sewage and slag (Marjorie J. Clarke Environmental Scientist Resource Recovery and Waste Disposal Planning. Minimizing Emissions from Resource Recovery. New York City Department of Sanitation. International Workshop on Municipal Waste Incineration. Sponsored by: Environment Canada. Meridien Hotel, Montreal, Quebec. October 1-2, 1987. Second Edition and L A. Fedorov. Dioxins as Ecological Danger: Retrospective and Perspective. M. Nauka, 1993 - 266p /www.seu.ru/cci/lib/books/dioksiny/).

As at burning waste products it is formed warmth, the desire to use it was natural. So movement:"Waste-to-Energy" has appeared (U.S. Pat. No. 5,862,762, Everett: B. Woodruff, Herbert B. Lammers, Thomas F. Lammers. Steam Plant Operation. 7-the Edition. Division of the McGraw-Hill Companies, 1998. Chapter 13. Waste-to-Energy Plants, p.729-774 and Joseph A. Salvato Nelson L. Nemerow, Franklin J. Acardy Environmental Engineering. 5-the Edition. John Wiley and Sons, Inc 2003. Chapter 5. Solid Waste Management, p.755 - 888). However, burning of solid waste with the purpose of reception of heat to manufacture the electric power results in the even greater environmental contamination. It speaks that the electric power consumption is not constant has daily and seasonal peaks that accordingly results in fluctuations of loading of combustion chambers of garbage incineration boilers and, as a result leads to incompletely burn of waste products and to the even greater emission of harmful substances with chimney gases, slag, ash and sewage. For only technical reasons (low-calorie fuel, ineffective generators, etc.) cost of the electric power made on municipal refuse incineration plants cannot compete to cost of the electric power on heat power stations. The price of one kilowatt on heat power stations 1 - 3 cents, and on refuse incineration plants - 11 cents. On laws in force for stabilization of the market to consumers of it is obliged to sell for 2 cents for 1 kilowatt that gives enormous losses for refuse incineration plants and in a combination to necessity of a burial place for slag and ash does these plants absolutely unprofitable, financial forecasts for their development are extremely adverse (The Wall Street Journal. August 11, 1993, p. A1 - A2).

Many companies pass from simple burning refuse to the two-level process including a stage of pyrolysis (decomposition of organic substances without access of oxygen) at rather low temperatures 450 - 800 °C (840 -1470 °F) . Such process appears energetically more favorable than simple burning. As a result of pyrolysis receive gas and the solid rest of pyrolysis. Then those and other products at once without any additional processing send to combustion chamber for burning. The part of gases of pyrolysis after condensation can be removed from system and used as liquid fuel by other consumers (U. S. Pat. Nos. 4,485,745 and 5,669,317). Thus the same lacks are observed as at direct burning waste products. In the same cases when gas of pyrolysis is exposed to clearing of acid gases such as chloride hydrogen (HCl), economically process becomes expensive because of application of the expensive equipment and using expensive caustic or calcinated soda and environmental contamination by heavy metals is not eliminated.

Alternative to process of pyrolysis is the process of gasification which goes similarly but at temperature 800 - 1300 °C (1470 - 2370 °F) and at presence of a small amount of air. In this case received gas represents a mix of low-molecular hydrocarbons which then burn in furnace. Such process does not improve an ecological situation whereas presence of air and availability of chlorine organic substances in refuse in combination with high temperature results in intensive formation of dioxins furanes and biphenyls. Salts of heavy metals as well as in other technologies from process are not removing and pollute an environment (U.S. Pat. No.5,445,087 and the Review of Modern Technologies of Reception of Liquid Fuel from Biomass by Fast Pyrolysis. 06.01.2003 21:59/ www.sciteclibrary.com).

The most complete destruction of the products contained in refuse is carried out during high-temperature pyrolysis or gasification at temperature 1650-1930 °C (3000 - 3500 °F) in volume fused in a mix of mineral additives with metal (U.S. Pat. No. 5,134,944), or at temperature up to 1700 °C (3100 °F) in volume melt of salts or alkalis in a mix with additives and at the presence of catalysts (Ukraine Patent No 57984 A). The specified ways provide processing refuse practically any composition as at such temperature are completely destroying all dioxins, furanes and biphenyls. As a result it turns to synthesis gas - a mix of hydrogen, methane, carbonic oxide, carbon dioxide, water steam, nitrogen oxides and sulfur, the solid rest - coke, pieces of inorganic materials, lime, cement, glass and slag which are proposed to be poured out from a reactor in sealed bunkers and forms without the instruction of their further use and wasted melts of salts and metal which regeneration are extremely complex and power- intensive process requiring besides the significant consumption of various reagents. Synthesis gas after enough complex decontamination can be used as fuel. It is necessary to note also that the specified processes do not provide removing of heavy metals and their salts from the solid rest of pyrolysis therefore the further application of slags for manufacture of building materials and designs is impossible, special measures on their recycling or a burial place are necessary.

The technology of processing of waste products on a basis of low temperature plasmas at 2000 - 100000 °C (3630 - 180000 °F) is applied basically to small volumes of especially dangerous waste products, for example, biologically polluted waste products of hospitals and differs by the high cost price of processing ($100 per ton of waste products) that-practically excludes a real opportunity to apply this method in large industrial scales (Installation for Medical and Hazardous Waste Treatment Using the AC Plasma - Arc System Soliton - NTT with Institute of Problems of Electrophysics. http://soliton.msk.ru/hazard.html 12.21.2002).

Concentration of oxides of heavy metals in slag and ashes in 2 - 3 times (sometimes and more) is higher some heavy metals than in burnt solid waste. Therefore, though thermal methods allow to reduce considerably volume of waste products, thus ashes even more dangerous to an environment and the slag requires special measures on recycling or a burial place are formed (Yufit S. S. Incinerate Factories - Rubbish Heap in the Sky. Ecoline, 1998). For processing of toxic slags the technology of ecological concreting is used: mixture of slags after their neutralization with cement, lime or dioxide silicon with the subsequent hardening a mix. At correct mixing waste products with the cohesive agent occurs original "incapsulation" toxic substances (including heavy metals and dioxins) in the cement stone which is not passing toxic substances into an environment. (U.S. Pat. Nos. 4,120,735, 4,518,508, 5,286,430, 5,466,407, 5,649,894 and 6,342,461). However, such technology requires preliminary neutralization of waste products for what a plenty of chemical reagents is necessary. A number of the substances making waste products, for example, sulphur-containing can cause degradation of a cement stone that results in diffusion of contamination into an environment. Besides, toxic metals in the certain conditions can be washed away from blocks by rains, for example, at change of acidity of rain water according to "weather conditions" (Yufit S.S. Incinerate Factories - Rubbish Heap in the Sky. Ecoline, 1998).

The advanced method of ecological reconcreting - the integrated mineral-matrix technology should provide ecological safety of a received material due to chemical banding of contamination down to their inclusion in a breaker plate cementing new formation (for example, heavy metals) or blocking of contaminators by colloid- disperse and sol-helium phases in mass of a forming material. (U.S. Pat. Nos. 4,726,710, 4,741,776 and 4,872,954). However, it is possible only at rationally picked up components of system when potential chemical properties of components of system and their mechanical characteristics are summarized (Knatko V.M., Knatko M.V., Scherbakova E.B. IMM - Technology Against Waste Products. /lmitation of Natural Processes of Mineral Formation - a Perspective Direction of Neutralization and Recycling of Industrial Wastes. Energy: Economy, Technique, Ecology. - No 12, 2001, p. 29-35). Commercially such condition cannot be executed as structure of municipal refuse and accordingly slag is not constant. Thus, even the advanced technologies do not provide manufacture of non- polluting, suitable for slag further use. Cost of slag burial place is ten times higher than a burial place for municipal refuse.

It is necessary to note that in all patents which have been mentioned above hardening of slag-concrete mixes it is stipulated at usual temperature of surround air that is the extremely irrational because it takes too long time and reducing forms turnaround delays release of finished goods. For acceleration hardening of concrete and increases physico - mechanical parameters of products apply thermohumid processing - steaming in chambers by the wet saturated steam which creates the thermal and damp inert environment, favorable for hardening of concrete. Modes of steaming are various and depend on structure of concrete mixes, the optimum temperature isothermal concrete warm up is 80 - 85 °C (175 - 185 °F) , that provides for 8-20 hours the same durability which concrete obtains in the age of 28 day (Bazhenov Y.M. Concrete Technology. Moscow, 1978, p. 205 - 229).

However, such way of reduction of a production cycle, increase physico - mechanical parameters of products provides significant expenses for construction and operation of boiler-houses, the big charge of the steam reaching 1,2 τ on 1m³ concrete and, accordingly, of water and fuel (Dmitrovich A. D. Heat and Mass Exchange at Hardening of Concrete in the Steam Environment. Moscow, 1967).

The fact of fuel production by pyrolysis of waste products is extremely important. In many cases it possible to replace oil fuel, or to use a mix of them. All known processes provide preliminary sorting and classification of waste products with the subsequent pyrolysis of an organic part in various temperature ranges: 200 - 600 °C (390-1110 °F) (U.S. Pat. No. 5,114,541), 315 - 565 °C (600 - 1050 °F) (U.S. Pat. No. 4,153,514), 400 - 870 °C (750 - 1600 °F) (U.S. Pat. No. 4,063,903), 430 - 730°C (800 -1350 °F) (U.S. Pat. No. 4,077,847) and burning of the solid rest of pyrolysis in furnace of various designs. All these processes, however, lead to environmental contamination by toxic salts of heavy metals and are not suitable for processing the waste products containing polyvinyl chloride and other chlorine-containing plastics in connection with formation of polychlorinated dioxins, furanes and biphenyls. Besides after separation of a condensate of pyrolitic gas on fuel and water phases, enough complex water treating before its dump into the water drain is necessary.

The way of three-stage burning developed for coal-fuel oil mazut and coal-dust boilers by Japanese companies Mitsubishi Heavy Industries, Inc. and Hitachi - Zosen (Development of MACT - in Furnace NOx- Removal Process for Utility Steam Generators / Y. Takahashi e. a. // Proceeding of the American Power Conference. 1982. Vol. 44, p. 402 - 412 and Three - Stage Combustion System for Pulverized Coal Developed for Commercial Use / Y. Sekiguchi e. a. // Hitachi - Zosen Technical Review, 1982. Vol. 43, p.95-104) and also of three-stage burning for combustible solid waste is known. (U.S. Pat. Nos. 5,205,227 and 5,307,746). These methods allow to lower considerably emission of nitrogen oxides, however, thus its require careful preliminary sorting of municipal refuse because the methods are unsuitable for burning the waste products containing linoleum, plastic, batteries, accumulators and other materials including chlororganic substances and heavy metals as thus slag and final chimney gases contain highly toxic dioxins, furanes, biphenyl and heavy metals.

By development of modem economically effective technologies of thermal processing municipal and similar waste products are necessary for achieving the maximal recycling of secondary power resources and first of all for preliminary heating and drying highly the damp and frozen together waste products.

In U.S. Pat. No. 4,859,177 the furnace for burning combustible waste products which rotational device is divided into a zone of drying and a zone of burning is submitted. Such integration of zones in one device provides economy of capital expenses at construction. However, optimum work of the furnace is possible only at receipt of waste products of constant humidity when recirculation degree of the final chimney gases in the rotational device and temperature in a zone of burning of the furnace are balanced and constant. In case of submission highly the damp or frozen waste products, and also waste products of variable humidity burning becomes unstable, chemical incompletely burn waste products and, accordingly, the charge of fuel and emission of harmful substances in an atmosphere and with slag sharply grows.

In Russian Patent No. model - 35,257 unit of pyrolysis of household waste products is described where the chamber of preliminary drying is designed as the bunker supplied with ripper and gas burners working on gas of decomposition of waste products for heating the bunker up to 150 - 200 °C (300 - 390 °F). However, heating the bunker with waste products by an open flame of burners local overheating and, accordingly, premature decomposition or ignition of waste products is possible. Besides final chimney gases of burners without recycling of heat are dumped directly in an atmosphere what addition ally pollute an environment and lead to the overexpenditure of fuel.

In U.S. Pat. No. 5,052,313, 5,080,581 and 5,285,581 is described the way of processing of waste products of the high humidity including preliminary dehydration in the mechanical device with the subsequent heating and drying in a multisection dryer by final chimney gases of furnace in the beginning without contact of environs, and then at direct contact of chimney gases to waste products. The liquid educed from waste products in the mechanical device, concentrates in the evaporator due to recycling of heat leaving of a dryer gas-vapor mixture, the concentrate goes to a dryer, chimney gases after clearing in a scrubber are dumped in a chimney. Such method allows to save fuel and to receive a wide range of in regular intervals dried up waste products before their feeding on burning. However, it is impossible, to process of the waste products, containing salts of heavy metals and chlorine organic substances as it is impossible to prevent dump them into an atmosphere and with slags polychlorinated dioxins, furones, biphenyls and salts of heavy metals, and the condensate received after cooling of gas-vapor mixture of a dryer in needed complex clearing before dump into the water drain.

In U.S. Pat. No. 5,231,936. is described drying and burning of high damp combustible waste products. Drying is carried out by final chimney gases of furnace. The air from the bunker of initial refuse by the fan moves as blasting in furnace for burning waste products that simultaneously destroys a part of feel unwell smelling gases. Drying by final chimney gases reduces the discharge of fuel, however, direct contact of environs results in pollution of chimney gases by feel unwell smelling and other harmful substances which then together with chimney gases are dumped in an atmosphere because the cyclone established before a chimney, entraps only a dust and soot substances.

In U.S. Pat. No. 4,542,703 unit for burning waste products of any humidity is described including subsequently positioned on the gases flow furnace of drying and burning of waste products and the afterburning of chamber of products of incomplete combustion. Waste products move in an end face of the rotating furnace opposite to a burner and move towards to a stream of gases that provides in the beginning their drying, and then and burning. Slag is unloaded from the furnace in area of location of a burner, and chimney gases go in the afterburning chamber which burner provides a spiral stream of gases inside the chamber at temperature 1200 °C (2190 °F). The afterburning chamber is established with the purpose of reduction of concentration of products of incomplete combustion including dioxins contained in final chimney gases of the furnace that would enable to burn plastics and toxins. However, in the Commoner's work (Commoner B. et al. Waste Management and Research 5:327 - 346, 1987) it is informed that at inspection of incinerators has been established that dioxins are formed during burning and that formation of them occurs also in a zone of cooling, therefore rise in temperature at burning does not result to destruction of dioxins. It is established that emissions of products of incomplete combustion from a different sort of furnaces of burning do not decrease at change of temperature from 700°C up to 1600 °C (1290 - 2910 °F) (Trenholm A., Thurnay R. Proceedings of the Thirteen Annual Research Symposium. Cincinnati, OH: U.S. EPA Hazardous Waste Engineering Research Laboratory, EPA/600/9 - 87/015, Jule 1987). And, at last, high temperatures result in increase volatility of components that lead to increase in emissions of dangerous heavy metals. Thus, the method of reduction of concentration of dangerous substances by afterburning has no substantiation and is not capable reduce emission of products of incomplete combustion and heavy metals.

In U.S. Pat. 4,292,742 is presented the plant of preliminary drying of burnt fuel by the impoverished oxygen gas or other inert gas, for example, by nitrogen. The system of drying of fuel represents the circulating contour included a heater of air with the fluidized bed of cooled slag, a dryer with the fluidized bed of dried up fuel, the cyclone, the filter and the fan connected among themselves by system of pipelines. Effective work of such plant is possible only for homogeneous in composition of a dried up material, for example, fuel. At processing non-uniform, complex waste products in composition what the municipal refuse is the high degree of ablation of light particles (a paper, a film, etc.), i.e. short time of their stay in the fluidized bed of a dried up material that will result to final high moisture content of refuse, to fast plug up of the cyclone, the filter and the condenser a damp material, a stop of a plant on clearing will be observed.

In U.S. Pat. No. 5,762,010 the way of processing of waste products of any humidity providing preliminary heating of the intermediate heat-carrier (the ceramic spheres used simultaneously and as the crushing agent) is described, due to utilization heat of process of pyrolysis with the subsequent separation of ashes from spheres in the punched part of a drum-type dryer. Then the specified spheres at temperature 750°C (1380 °F) mix up with initial waste products and dry them with simultaneous heating of air submitted in a casing of a dryer. Exuded from waste products steam mixes with hot air and moves to heat the initial waste products. The part of the received gas of pyrolysis without additional processing goes to furnace to the burning, final chimney gases heat up other part of gas of pyrolysis to temperature 750 °C (1380 °F) which moves in the chamber of gasification for pyrolysis of waste products. Surplus of gas of pyrolysis is burnt in burners on open air. However, this way is suitable only for processing of industrial residue with the content of dry substances no more than 10 % when formed ashes is easily kibble by spheres and then is eliminating on screens. At processing of municipal waste products stable fine grind formed slag and, accordingly, its separation on screens from spheres is impossible that will result in an often stop of the equipment for cleaning. Use of surplus of gas of pyrolysis is not stipulated as commodity fuel therefore it is all burnt for nothing in burners at open air that in addition ally pollutes an environment, chemical neutralization of steam condensate of dryer before its dump in the water drain is necessary. Besides at processing the waste products containing chlororganic substances and heavy metals, environmental contamination by dioxins, furanes, biphenyls and salts of heavy metals is inevitable.

In U.S. Pat. No. 4,797,091 preliminary drying of an organic part of sorted crushed waste products before hauling in a pyrolysis reactor by air which has been heated up due to recovery of heat of slag leaving of the rotational furnace is provided. The system of drying of waste products represents the circulating contour including a cooler of slag, a crusher of waste products, a pneumatic dryer and a cyclone connected among themselves by system of pipelines. Drying of waste products is carried out by direct contact to hot air in a vertical pipe of a pneumatic dryer. However, because in plant removal of a moisture from the heat-carrier or preliminary heating of cold damp refuse is not provided, at their direct contact the temperature of air can be reduced up to temperature of a dew-point what will result in drainage of air due to loss of a condensate and, accordingly, to humidifying instead of drying of refuse. In case of increase of the flow of the hot air what excluding its cooling up to a dew-point consumption of the electric power for blasting sharply increases what is inherent in work of pneumatic dryers. Besides, to adjust duration of drying and final moisture content of dried up refuse is practically impossible. Thereof into reactor of pyrolysis enters non-uniformly dried up waste products that, accordingly, results in the overexpenditure of fuel in pyrolysis process.

Thus, the problem of preliminary drying municipal and similar waste products before its delivery for thermal processing has no satisfactory solution.

In U.S. Pat Nos. 4,353,713, 4,448,558 and 4,597,771 are described processing of coal together with light fraction of the municipal solid waste including preliminary sorting and crushing of the specified waste products their mixing with limestone, pyrolysis of the received mixture with the subsequent clearing of pyrolitic gas, allocation of some products, burning of the rest and use of heat of exothermal reactions between limestone or dolomite and dioxide of carbon. These processes, however, lead to environmental contamination by toxic salts of heavy metals and are not suitable for processing of waste products of plastic, despite that limestone or dolomite could neutralize discharged at decomposition of plastic hydrogen chloride (HCl). It speaks that chloride calcium received at such neutralization (CaCl₂) in conditions of high temperature in gasifier 650 - 980°C (1200 - 1800 °F) is in the melted condition (the temperature of melt of CaCl₂ is 737 - 747 °C (1358 - 1376 °F) that results in sintering and lumping of processable waste products, to sharp decrease of efficiency of contact of environs and in a combination to weak hashing does process of neutralization of hydrogen chloride absolutely not effective and, hence, practically excludes an possibility of processing of plastic. The high temperature in furnace 1090 - 1315 °C (2000 - 2400 °F) results in the fused condition of salts of heavy metals, in general chlorides and sulfates, (temperature of fusion 242 - 915 °C (467 - 1678 °F), and, above their surface exist taking place in balance with these melts their steams. As partial pressure of steams these salts is not enough, they in weight of chimney gases are carried away from the furnace in a chimney, and, due to low concentration to allocate them from gases it is practically impossible though their total represents a vital issue. In slag also there are salts of heavy metals that excludes an opportunity of its further use.

In U.S. Pat. No. 6,202,577 is shown processing of municipal and similar waste products including removal from them large metal objects crushing and mixing with limestone. Pyrolysis of the specified mixture is carried out in two stages. The first stage - in the mixer located in the furnace, at temperature 240 - 260°C (460 - 500 °F) due to heat recycling of part of the solid rest of pyrolysis when chlororganic compounds which are taking place in refuse, decay with allocation of hydrogen chloride (HCl) which reacts with crushed limestone and thus is lead out from process. The second stage is carried out at temperature 450 - 500°C (840 - 930 °F) due to utilization heat of the chimney gases received in combustion chamber located below. Thus polychlorinated dioxins, furanes and biphenyls in volume of the furnace are not formed because all chlorine has been removed from processable refuse at the previous stage of pyrolysis. Gas allocated during pyrolysis is condensed, the organic phase of it, is liquid fuel and goes together with noncondensed gases in combustion chamber. The water phase feeds on a stage of washing out salts of heavy metals and calcium chloride (CaCl₂) which formed at neutralization of hydrogen chloride (HCl). The washed out part of solid products of pyrolysis after drying by mixing with hot slag feeds in combustion chamber on burning. As a result received slag not containing heavy metals and sulfur. The presented way has a number of essential lacks:
1. Process of preliminary drying of initial municipal refuse is not anticipated. It is known that process of pyrolysis begins only then when water is completely evaporated and temperature has achieved critical value at which decompose of organics contained in the refuse takes place. This period depends of humidity of initial refuse can take up to 30 - 40 % of length of all path of a material in the furnace of pyrolysis. Thus, presence of a moisture in refuse results in increase in time of presence of waste products in the furnace of pyrolysis that essentially reduces its productivity, results in the overspend of fuel and, accordingly, reduction of an out put of commodity fuel.
2. The municipal refuse contains different objects and materials including glass, the temperature interval of beginning of its softening depending on composition is equal 400 - 600°C (750 - 1110 °F). Thus, cooling of slag by air which temperature is below specified will result in glass-transition and slagging of slag cooler and, accordingly, in stop of work of all factory. Slag cooling at higher than the specified temperature the significant part of heat is losing what results in the overspend of fuel in combustion chamber and, accordingly, to reduction of an output of commodity fuel.
3. The washed out solid products of pyrolysis after a scrubber have high humidity that causes the big consumption of hot slag for their drying in the mixer before feeding on burning. As a result in combustion chamber recycling the significant amount of slag which to ballast combustion chamber what complicates burning out combustible components of a solid product of pyrolysis, results in the overspend of fuel and, accordingly, reduction of an output of commodity fuel.
4. Manufacture of finished articles from slag is not stipulated what considerably reduces economic parameters of work of a plant.
5. At use of limestone during pyrolysis of municipal refuse alongside with its interaction with hydrogen chloride it is impossible to exclude and interaction with organic acids. Therefore to expect reception of organic acids including acetic, ant, metactonic, oil, etc. in essential quantities it is impossible. In this connection instead of reception of organic acids it is more rational to organize manufacture of liquid hydrocarbonic fuel.
6. The water entered together with damp refuse is processed during the process. Due to evaporation of a plenty of water in dryers of calcium chloride and dump water steams together with final chimney gases into an atmosphere the given technology has no sewage, however, the significant amount of fresh water is needed on additional adding water to turnaround system of cooling and cooling of slag before its sending to the consumer.
7. During neutralization of hydrogen chloride by limestone in the furnace of pyrolysis calcium chloride is formed which then together with salts of heavy metals is extracting by washing water. After drying a part of this solution receive dry calcium chloride together with a concentrate of salts of heavy metals. Such mix is not a commodity product, it is necessary to provide their separate manufacture.
8. Their complex and expensive preliminary clearing of harmful impurity (acids, sulfuric compounds, etc.) is necessary for producing of liquid carbonic acid from gases of pyrolysis by chemical sorbents with the subsequent clearing gas in electrofilters or by compressing up to high pressures with the subsequent condensation and separation of impurity that does production of carbonic acid economically not the favorable enterprise and, accordingly, does not reduce emission of carbon dioxide (CO2) into an atmosphere.
9. The joint burning in combustion chamber liquid fuel, noncondensed gases of pyrolysis and solid products of pyrolysis is executed not rationally what leads to significant emissions of nitrogen oxides in an atmosphere.
10. Direct contact between washing water and noncondensed gases of pyrolysis in a scrubber due to a difference in partial pressure of light organic substances in water and gas in the beginning results in enrichment by organic substances of the gas phase feeding in combustion chamber, i.e. to blowing waters from light organic substances. Then taking into account that the quantity of these gases is not enough and also that in them due to ablation in separated vessel products of incomplete condensation of organic substances will collect that will result in receipt in dryer of calcium chloride the water phase with the raised contents of organic substances and, accordingly, will start the emissions of organic substances in a chimney and an environment
11. For carrying out the process of pyrolysis the rotating drum furnace including built - in devices for return of a part of a solid product of pyrolysis in the beginning of process and its mixture with again acting mix of waste products with a limestone is used. Such complex design of the furnace creates difficulties while in service including to stops on cleaning and repair.

Thus, for creation of the advanced highly effective technology and a plant for processing municipal and similar waste products it is necessary to exclude all lacks specified in the previous patents.

### SUMMARY OF THE INVENTION

The purpose of the invention - to create economically effective the method and plant for processing of wastes including a solid municipal or like refuse and also together with it earlier specified waste products due to manufacture of non-polluting commodity products: liquid fuel, dry calcium chloride, liquid carbonic acid, a concentrate of salts of heavy metals and slag- concrete products for the building industry.

The following purpose of the invention - to exclude emission in an environment of organic light flying and feel unwell smelling substances, carbon monoxide (CO) and salts of heavy metals, including radioactive, to reduce emission of carbon dioxide (CO2) and nitrogen oxides (NOX), to exclude formation of highly toxic polychlorinated benzodioxins, -furanes and - biphenyls by removing of air from the preparation block of waste products and its use at the first stage of drying of initial waste products under underpressure with submission of noncondensed gases in combustion chamber, blowing of condensates by the hot air feeding then also in combustion chamber and burning in volume of combustion chamber in three stages, extraction salts of heavy metals from a solid product of pyrolysis, neutralization in the first stage of pyrolysis of evolving hydrogen chloride by limestone.

The following purpose of the invention - to increase an output of commodity liquid fuel due to reduction of its use on own needs by deep recycling secondary waste heat of slag, a solid product of pyrolysis, pyrolitic gas, final chimney gases of combustion chamber and dryers of calcium chloride, centrifugal separation of the solid product of pyrolysis washed in an extraction unit.

The following purpose of the invention - to provide effective preliminary drying of municipal and similar waste products of any humidity including frozen together by two-phases drying - in the beginning with the hot air which has been heated up due to utilization of heat of final chimney gases of combustion chamber after heating by them the furnace of pyrolysis and then mixing with a part of a solid product of pyrolysis.

The following purpose of the invention - to carry out separate manufacture of a concentrate of salts of heavy metals and dry calcium chloride by consecutive elicit salts of heavy metals from washing water after an extractor at first, for example, by sorbents and electrocoagulation, and then calcium chloride in dryers due to utilization heat of final chimney gases of combustion chamber.

The following purpose of the invention - to reduce a production cycle, to improve physico-mechanical parameters of slag-concrete products by thermohumid treatment by final damp chimney gases of dryers of the calcium chloride finishing as far as 100 % relative humidity by moist saturated steam of low pressure from the heat recovery-boiler or of the vapor of corresponding technological equipment.

The following purpose of the invention - to reduce the consumption of water for technological needs due to return to manufacture the condensate received at condensation of a moisture from damp chimney gases after dryers of calcium chloride cooled before production of carbon dioxide and from the chamber of thermohumid treatment of slag concrete and also use of part of the made solution of calcium chloride for setting acceleration and hardening of concrete with corresponding decrease of the amount of water for concrete batch.

The following purpose of the invention - to exclude a stop of a plant for clearing and repair in connection with slagging of a slag cooler and breakage of the recycling mechanism of pyrolysis furnaces by installation a rotating drum cooler of slag and pyrolysis to make in two stages in consistently established neutralizer and the drum furnace of the pyrolysis connected among themselves by way of a product by elevator and screw feeder and on a path of gases of pyrolysis by the pipeline with the fan providing direct-flow movement of environs in the furnace of pyrolysis.

More detailed explanation of mentioned above and other purposes and advantages is submitted in the detailed description of the invention together with accompanied drawings.

Thus, the offered technology provides manufacture of non-polluting commodity products is based on thermochemical processing of wastes (pyrolysis) and does not require their preliminary sorting. However, taking into account experience of Germany, local conditions and economic reasons it is useful to allocate preliminary with known ways objects which recycling is expedient, for example, ferrous metals, aluminum and glass though the technology of it does not demand it.

During process such highly toxic substances as polychlorinated dibenzodioxins, -furanes and -biphenyls are not formed, and salts of heavy metals, including radioactive, instead of emission in an environment gather as a concentrate. Atmospheric discharge of carbon monoxide (CO) is excluded, organic light flying and feel unwell smelling substances is excluded too, emission of carbon dioxide (CO2) is reduced in comparison with working plants on 64 %, and nitrogen oxides (NOx) - on 60 %.

The recycling system of heat carried out in productions is maximized so that provides the coefficient of useful consumption of heat energy of a plant of 93,5 % that together with manufacture of own fuel allows not only to refuse to use of fuel from the outside, but also to expose the stayed quantity on the market. Only during start-up period of a plant it is necessary to use earlier made fuel or fuel from extraneous sources.

All stages of process are not toxic, not fire hazardous and explosive. Process is continuous also is fully automated, allows to process effectively waste products of any humidity including frozen together.

There are no liquid and solid secondary waste products as water and the water solutions formed in process are processed during the process and the slag cleared of heavy metals and sulfur is used in manufacture slag-concrete products Production waste are only chimney gases which not containing highly toxic components. Besides in connection with application of thermohumid treatment and depending on composition in 30 - 80 times are reduced hardening time of concrete mixes, increase of physics - mechanical parameters of slag concrete products. Thus the consumption of fuel is excluded due to heat utilization of final chimney gases combustion chamber and dryers of calcium chloride.

Capacity of the plant can vary within a wide range of parameters because it consist of separate technological lines in which the standard series-produced equipment is used only.

As a result of the calculations it is established, that at processing of one ton of municipal refuse of average composition the following commodity products are manufacturing: 110 kg of liquid fuel with heat value about 8100 kcal/kg (14,500 Btu/lbm), liquid carbon dioxide and dry calcium chloride (more than on 30 kg of each product), up to 6 kg of a mix of salts of heavy metals and coke or coal (150 g actually salts), up to 300 kg of slag not containing a harmful impurity.

Liquid fuel is used for heating buildings and in power boilers, Liquid carbon dioxide - for carbonation of beverages, in welding practice, etc. Calcium chloride is applied to acceleration of concrete hardening, as deicer for roads, railway switches, regelation of coal and ores, at preparation of refrigerant, medical products and in an agriculture. Heavy metals is raw material for a metallurgical industry. The slag cleared of heavy metals and sulfur is used in road construction and at manufacturing of slag concrete products.

An advantageous embodiment concerns a plant for processing of wastes comprising the steps of:
15.1 a dryer with heat-transfer surface supplied with a casing for the heat-carrier, internal shaft with blades mounted on a screw line for mixing, moving and tightening of pyrolysis mixture, the drum feeders installed at input and output of the specified mixture, an additional branch pipe with the regulating gate for submission of acid tars, connected by system of pipelines from the part of an output of vapor with condenser installation, an input of the heat-carrier - with the air heater installed in chimney of final chimney gases of a plant, and from the part of an output- with the fan feeding an air in a scrubber for blow away a condensate from an impurity the organic substances and the cooler of slag located below combustion chamber;
15.2 a condenser installation for vapor of a dryer supplied with the condenser, the fan, the tank of a condensate and the condensate removal pump connected by system of pipelines on the part of an input of vapor with a dryer, an output of a condensate - with a scrubber to blow away of a condensate from an impurity of organic substances by air coming after heating of a dryer, and an output of noncondensed gases through the fan with burners of combustion chamber;
15.3 a mixer-dryer supplied with parallel horizontal shafts with speed rotation regulator and blades mounted on the screw line carrying out final drying of specified pyrolysis mixture due to mixes with a part of the solid rests of pyrolysis and connected by the pipeline with a drum feeder on the part of an input of the solid rests of pyrolysis with the furnace of pyrolysis, system of pipelines for pyrolysis mixture on the part of an input with a dryer, on the part of an output of the drained mixture with neutralizer, on the part of steam output- with the condenser and an extractor, and noncondensed gases - through the fan with burners of combustion chamber;
15.4 an installation for washing other part of the solid rests of the pyrolysis leaving the rotating furnace of pyrolysis supplied with the extractor which body keeps on a branch pipes of input and output of the solid rest of pyrolysis and washing water, output of vapor and an input of a condensate, an internal shaft with blades mounted on a screw line for mixing and movings of a product to a countercurrent to coming washing water and rotating device for a unloading of the washed rests of pyrolysis, pumps, the condenser, the fan and a settling centrifuge with an automatic unloading of the deposit connected by system of pipelines thus, that the extractor an input of the rests of pyrolysis connected through a drum feeder to the furnace of pyrolysis, and on an output - with a centrifuge, on an output of vapor - with the condenser, the condensate from which again comes back in an extractor, and noncondenced gases by the fan move in the burners of combustion chamber, and, the centrifuge via line of filtrate through the pump and heat exchanger is consistently connected with installation for clearing of liquids from heavy metals and with an extractor, and via line of deposit - with the mixer-dryer installed under a furnace;
15.5 a neutralizer supplied with branch pipes for an output of gases of pyrolysis, a casing for feed of hot air and the shaft built in inside with blades mounted on the screw line providing the first stage of pyrolysis with simultaneous neutralization of hydrogen chloride and reception of the calcium chloride connected on the part of an input of pyrolysis mixture with the mixer-dryer, on an output - through elevator and screw feeder with the rotating furnace of pyrolysis, and, branch pipes of an output of pyrolitic gas by system of pipelines through the fan are connected to the furnace of pyrolysis, branch pipes of a casing on an input of air are connected with the forced draft fan and on an output - to a cooler of stag;
15.6 a furnace of pyrolysis of the organic products contained in pyrolysis mixture supplied with a rotating drum with external heating by chimney gases of combustion chamber, external and internal ribbing surfaces, motionless loading and unloading the end faces connected on the part of an input with a screw feeder of a mixture and with a forced draft fan of gas of pyrolysis from neutralizer, on an output of the solid rests of pyrolysis through drum feeders with the mixer-dryer and an extractor, moreover on an output of chimney gases and gas of pyrolysis with the cyclones connected on an output of a dust of a product with a specified screw feeder;
15.7 a combustion chamber blocked with the furnace of the pyrolysis located below specified furnace and supplied with a moving chain-grate stocker for burning the washed out solid rests of pyrolysis, the burners located above of a grate bar surface for burning of liquid and gaseous products of pyrolysis and noncondensed gases, during start-up of a plant - reserve fuel and also air nozzles of the sharp blasting located above burners;
15-8 a condenser installation of the pyrolitic gas supplied with connected by the system of pipelines the cyclone, the heat exchanger for heating of the high temperature organic heat- carrier, the tubular condenser, the scrubber-chemisorber, the separated vessel, the tubular heat exchanger for condensate cooling, the circulating pump, the collecting tanks for water phase and organic fuel, the cartridge filters, the pump for feeding of a water phase in a scrubber for to blow away of organic impurity, the pump for feeding of liquid organic fuel in burners of combustion chamber and a warehouse of finished goods, the fan for feeding of noncondensed gases in burners of combustion chamber, and, at infringement of a technological mode for neutralization of acidic impurities anticipated installation of a tank with a mixer and the metering pump of neutralizing solution;
15.9 an installation for blowing away of the water phase of condensed products pyrolysis from the organic impurity, supplied with a scrubber filled with put on rings, the pump and the fans connected by system of pipelines at an input of hot air through the fan with a dryer, at an output through the fan with a cooler of slag, at an input of a water phase with condenser installation of a pyrolitic gas, and at an output through the pump with an extractor;
15.10 an installation for heat utilization of the final chimney gases supplied consistently connected with chimney a cyclone, air heater with the fan for air feeding, exhauster and the heat recovery boiler for moist low pressure saturated steam production connected at the input of chimney gases with the furnace of pyrolysis, and at the output with installation for reception of calcium chloride, and, the cyclone at an output of a dust is connected with a screw feeder of the furnace of pyrolysis, air heater at the input of air through the fan is connected to a place of preparation of waste products, at the output with a dryer, and the heat-recovery boiler is connected by a steam line to the chamber of thermohumid processings of slag concrete;
15.11 an installation for feeding of the moist saturated steam in the chamber of thermohumid processings of the slag concrete replacing in case of complexity of a choice serially manufacture heat- recovery boiler of required productivity and supplied with the electric steam boiler connected by the system of pipelines at the input of a condensate and an output of steam with the specified chamber of processing of slag concrete and the fan connected at the input of steam with pipelines for vapor of mixer-dryers and an extractor, and at the output of steam - with the specified chamber of processing slag concrete;
15.12 an installation for manufacturing the calcium chloride supplied with a spray and a screw dryers, a a screw cooler, exhausters and a cyclone connected by system of pipelines in such a manner that drying of a solution of calcium chloride is carried out due to heat utilization of final chimney gases in two stages: in the beginning in a spray, and then in a screw dryer with the subsequent cooling in a screw cooler, and, the consumption of the chimney gases, feed by the exhauster simultaneously in a spray dryer and a screw dryer is supported automatically by system of the streams ratio block, and final moist gases are released from drops of a solution in a cyclone and move to the installation for reception the carbon dioxide and to the chamber of thermohumid processings of slag concrete;
15.13 an installation for reception carbon dioxide from the chimney gases supplied with the equipment using a method of reception carbon dioxide with the help of the monoethanolamine, connected by system of pipelines at the input of the heating agent with the heat exchanger for heating of the high temperature organic heat-carrier, the scrubber - cooler of chimney gases before an absorber of the installation is connected by condensate pipe with cooling tower of plant and the exhauster of final gases - with chimney of final chimney gases of a plant and a chimney;
15.14 a mixer-dryer of the washed and filtered solid rest of the pyrolysis supplied with parallel horizontal shaft with blades put on the screw line carrying out drying the specified rest of pyrolysis due to mixing with other part of hot slag of combustion chamber and connected at the input with a centrifuge and through the gate with the combustion chamber, and at the output through an elevator and screw a feeder with the bunker of a combustion chamber, an output vapor - with the condenser and an extractor, and noncondensed gases through the fan - with burners of the combustion chamber;
15.15 an installation for cooling the slag supplied with the rotating drum cooler of slag which entrance part lining by the firebrick and connected through the gate to combustion chamber, other part of the drum has internal nozzles and steel or ceramic spheres for shoveling and crushing of slag, the scraper conveyer located in the case having surfaces of cooling and the bunker of the cooled slag, and, the drum cooler in a countercurrent to movement of slag is connected at an input of air through the fan with the dryer, at an output through the cyclone with the forced draft fan, surfaces of cooling of the conveyer are connected to the pipeline of the calcium chloride solution cleared of heavy metals and to turnaround system of cooling tower and the bunker of the cooled slag - with a warehouse of manufacture goods and with installation for reception of a slag concrete;
15.16 an installation for reception of a slag concrete products supplied with a concrete mixer for reception of a concrete mixture of necessary composition, a vibration platform for modelling and compaction of the specified mixture, exhausters, a condensate removal pump and the chamber of thermohumid processing connected by system of pipelines at an input of the heat-carrier with installation for reception of calcium chloride and the heat recovery boiler, at an output through exhausters with chimney of final chimney gases of a plant and a chimney, and at an output of a condensate - through a condensate removal pump with turnaround system of water supply of cooling tower and an extractor.

Furthermore, it is possible that in step 15.1 the drum feeders simultaneously with regulation of the consumption of pyxolysis mixture exclude external air inleakage in working volume of a dryer. Additionally, it is possible that in step 15.2 condenser installation ensures the functioning of the dryer with heat-transfer surface under necessary underpressure 2-10 mm of H₂O Furthermore, it is possible that in step 15.3 the temperature of the drained mixture at an output from the mixer-dryer is no more than 110-115 °C (230 - 240 °F) and is established due to speed regulation of shaft rotation inside the device. Additionally, it is possible that in step 15.3 and 15.4 the ratio of the consumptions of the solid rests of pyrolysis in the mixer-dryer and an extractor it is adjusted by the drum feeders established at an output of the solid rests of pyrolysis from the rotating furnace of pyrolysis so that pyrolysis temperature of a mixture in neutralizer is established at a level 220 - 250 °C (430 - 480 °F). Additionally, it is possible that in step 15.5 the forced draft fan sends hot air at temperature 260 - 270 °C (500 - 520 °F) to a casing of neutralizer only for compensation of losses of heat into an environment. Additionally, it is possible that in step 15.6 the fan of sending of pyrolysis gas of from neutralizer ensures the functioning of the furnace of pyrolysis under necessary pressurization of 5 - 15 mm of H₂O. Additionally, it is possible that in step 15.7 regulation of the consumption of air sending in burners located above a grate bar surface of lattice is corrected depending on the content of nitrogen oxides (NOX) in final chimney gases of combustion chamber. Additionally, it is possible that in step 15.8 at infringement of a technological mode clearing of gases and vapors from the acid impurity is carried out automatically under the indication of pH-meter by turning on the metering pump connected at the input with vessel of a neutralizing solution, and at the output with the pipeline connecting a scrubber - chemisorber with the circulating pump of a cooling contour of a condensate of the specified scrubber. Additionally, it is possible that in step 15.11 the electric steam boiler is intended for work during start-up and a stop of a plant and during the established operating mode is used the fan sending vapor of the mixer - dryers and extractor into the chamber of thermohumid processing of slag concrete. Additionally, it is possible that in step 15.12 the initial solution of calcium chloride with concentration of 7 - 12 % to boil off up to 50 - 70 % in a spray dryer and then is finally dried up in a screw dryer up to humidity no more than 0.5 %, and, work of streams ratio block system of chimney gases among dryers is adjusted under the indication of temperature of chimney gases at an output from the specified dryers equal to 110 +-5 °C (230 °F). Additionally, it is possible that in step 15.14 and 15.15 ratio of the consumption of slag in the mixer-dryer and a cooler of slag is adjusting by position of the proportioning gate established at an output of slag from combustion chamber so that the temperature of a mixture of the washed and filtered solid rest of pyrolysis and slag was established not above 101 - 102 °C (214 - 216 °F). Additionally, it is possible that in step 15.15 an entrance motionless end face of a cooler of slag and 15 - 25 % of length of a rotating drum at the input of slag lining with the firebrick with fire resistance not less than 1300°C (2370 °F). Additionally, it is possible that in step 15.15 for reception of uniformly crushed slag as the crushing agent steel or ceramic spheres in diameter 100 - 150mm are used occupying 10-15% of working volume of the drum limited at an output of slag by a cross lattice. Additionally, it is possible that in step 15.16 the chamber of thermohumid processings of the slag concrete products is executed as the tunnel with the band conveyer located inside, a floor inclined aside pit for collecting of a condensate, a branch pipe of an input of the damp chimney gases located in the center of the top part of the tunnel, two branch pipes of an output of the chimney gases located in the beginning and the end of the top part of the tunnel, and, a drive of the conveyer is supplied with a regulator of speed, and exhausters are supplied with axial directing devices and two-high-speed electric motors.

### BRIEF DESCRIPTION OF THE DRAWINGS

The above described and other purposes, prominent features and advantages will be more clear from the subsequent detailed description where are made references to drawings in which:
FIG. 1 is a block diagram of a method for processing of wastes;
FIG. 2 is a block diagram of a method for processing of wastes without a heat-recovery boiler for receiving low-pressure moist saturated steam;
FIG. 3 is a flow diagram of one embodiment of a plant for processing wastes; and
FIG. 4 is a flow diagram of a second embodiment of a plant for processing wastes without the heat recovery boiler for reception of the low pressure moist saturated steam.

### DETAILED DESCRIPTION OF THE INVENTION

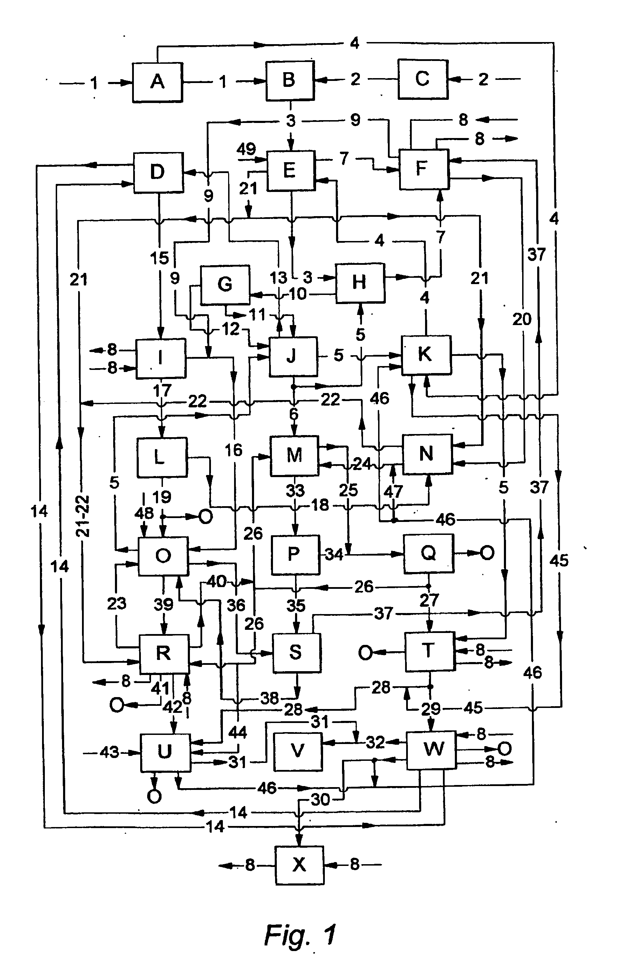

In FIG. 1. a block diagram of a method for processing of wastes is shown. A municipal and similar solid waste 1 feed in a waste preparation unit A where from them separate large objects which cannot be grinded. The given technology does not demand preliminary sorting of wastes, however, depending on local conditions and economic reasons it is useful to allocate with known ways preliminary objects which recycling is expedient, for example, ferrous metals, aluminium and glass. Then waste products crush till the size of particles no more than 10-15 mm (- 1/2 "). Simultaneously in an unit C on crushing limestone 2 feeds. In an unit B carry out mixing limestone powder with crushed waste products in the weight ratio depending on the content in them substances, capable to react with limestone and from variant of further use of slag received in a combustion chamber (unit O) and cooled in an unit R. At direct sending cooled slag to the consumer a weight ratio of limestone with solid waste is from 1:5 till 1:20 depending on content of chlorine in waste products. In case of receipt of the cooled slag in an unit U to manufacture slag- concrete products on mixing in the unit B limestone in the quantity dependent on a mix formulation of concrete. At processing refuse together, for example, with acid tar limestone also adds in the quantity dependent on the content of sulfuric acid in tar. The mix received for pyrolysis preliminary feeds on a drying which is carried out in two stages. In the beginning via line 3 mixture moves in an unit E. The drying agent is air 4 which are taken away from the waste preparation unit A and heated up in an unit K of utilization of heat of final chamber gases up to temperature no more 250 - 260 °C (480 - 500 °F) by a chimney gases 5 going from the combustion chamber (unit O) after heating by them of a pyrolysis furnace (unit J). Such low temperature of air excludes local overheating and premature decomposition during dryings (unit E) of chlorine-containing organic substances of the refuse, and warmed dryers through a surface of heat exchange excludes contact of air to refuse and, accordingly, its pollution that allows then to make them to blow away of a water phase of liquid products of pyrolysis from contaminating organic substances. The consumption of air 4 is defined by requirements of burning process in the combustion chamber O, that provides its further full use, excludes emission of used air and, accordingly, contained in it after to blow away of a water phase of organic and feel unwell smelling substances in an environment. Humidity of a mixture of refuse with limestone on an exit from the unit E depends of humidity of initial refuse and thermal balance of the system, i.e. quantity of heat which can be given strictly regulated consumption and temperature of air going finally in the combustion chamber O. At joint processing of refuse with the waste products containing substances capable immediately to react with limestone with emitting the products of reaction in an environment, for example, acid tars containing up to 70 % of sulfuric acid dissolved in water move for processing via line 49 to an input in the unit E where proceeds reaction:

H2SO4 + CaCO3 = CaSO4 + CO2 + H2O

Optimum weight ratio of the refuse with acid tars is from 5:1 to 10:1 depending on the contents of sulfuric acid in tars. Allocated carbon dioxide (CO2) and then along with moving of the mixture in a dryer and water vapor via line 7 come in an unit F and then noncondensible carbon dioxide via lines 9 and 16 goes in the combustion chamber O that excludes its dump in an atmosphere. The formed calcium sulfate (CaSO4) - gypsum is deduced from process together with slag from the combustion chamber O.

Finally the mixture of refuse with limestone is completely drained in an unit H due to mixing with a part of the solid rest of pyrolysis 6 of the unit J (the furnace of pyrolysis), proceeding at temperature 450 - 500 °C (840 - 930 °F) . When water is completely evaporated, the temperature of a mixture starts to grow quickly. With the purpose of ruling out premature decomposition of the organic substances the drained mixture moves further in to the block of pyrolysis at temperature no more than 910-115 °C (230-240 °F). Exuded in both stages of drying (units E and H) water steams 7 are condensed in the unit F by turnaround water 8 coming from the cooling tower (unit X) or the water used for heating and hot water supply of a plant (on the circuit it is not shown) , and then by turnaround water 8 of specified cooling tower. Noncondensed gases via line 9 go to the afterburning and deodorization in the combustion chamber O. Such two-stages method of drying allows to process effectively initial refuse of any humidity including the frozen waste products.

Process of pyrolysis also is carried out in two precisely divided among themselves stages. The first stage is carried out in an unit G without access of air where the incoming mixture 10 first of all is heated up. The consumption of the heat- carrier - the solid hot rest of the pyrolysis 6 coming from the unit J - furnace of pyrolysis - is adjusted so that the temperature of a mixture was established in limits 220 - 250 °C (430 - 480 °F), that provides reaction of decomposition of chlorine- containing organic components of refuse, for example, polyvinylchloride, linoleum, plastic, etc. by necessary heat, and also simultaneously protects pyrolysis material from clotting and sticking to walls of the equipment. Thus all chlorine contained in refuse passes in hydrogen chloride (HCl) which practically at the moment of educing reacts with limestone powder and thus is removing from process with formation of calcium chloride (CaCl2):

2HCl + CaCO3 = CaCl2 + CO2 + H2O

The second stage of pyrolysis is carried out also without access of air at temperature 450 - 500 °C (840 - 930 °F) in the unit J where dechlorinated solid 11 and gaseous 12 products of pyrolysis are coming from an unit G. Process proceeds due to heat of the chimney gases 5 entering from the combustion chamber O. Because process is conducted without access of oxygen and chlorine has been removed from the process at the first stage of pyrolysis, formation of chlorinated dioxins, furanes and biphenyls is excluded.

The solid rest of pyrolysis 6 goes from the furnace of pyrolysis J on a stage of extraction M where it is carrying out it washing out by hot water water-soluble salts including salts of heavy metals. Gases of pyrolysis 13 coming in a heat exchanger (unit D) where heat up the high-temperature heat-carrier 14, for example, based on ethylene glycol, up to temperature is not lower 150 - 160 °C (300 - 320 °F) submitted then as the heat-carrier for a stage of reception of liquid carbon dioxide (unit W) from chimney gases. The cooled gases of pyrolysis 15 go on a stage of condensation (unit I) where they are condensed by turnaround water 8 received from the cooling tower X. In case of perturbation of a technological mode or emergencies when ingress of sour gases is possible into a pyrolitic gas condensate, automatically under the indication of pH-meter it is injecting neutralizing solution 50, for example, solution of caustic soda (NaOH). Noncondensed part of pyrolitic gases 16 (methane, CO, CO2, etc.) go to burn in the combustion chamber O.

Condensed products of pyrolitic gases 17 are separated in a settler L on water 18 and organic 19 phases. The organic phase 19 is high-calorific liquid fuel with heat value ∼ 8100 kcal / kg (14500 Btu/Lbm) which moves to the combustion chamber O. The surplus of the manufacturing fuel goes to a warehouse of finished goods.

The water phase 18 of liquid products of pyrolysis from the unit L together with a condensate 20 from the unit F goes to an unit N where in a scrubber it is made to blow away the organic substances dissolved of water, basically the acetone, by a part of hot air 21 after drying through a heating surface of a mixture of municipal solid waste and limestone in the unit E. Temperature of incoming air is 105 -110 °C (220 - 230 °F). Process is carried out due to a difference of partial pressure of light organic substances in water and air at their direct contact that results in enrichment by organic substances of air. Then air 22 sated by vapors of organic substances and moisture mixes up with the main stream of hot air 21 leaving the dryer E is addition ally heated up due to cooling of slag in the unit R to temperature 260 - 270 °C (500 - 520 °F) and moves to burn in the combustion chamber O via line 23.

Blow off from organic products water phase 24 from the unit N goes on a stage of washing off the solid rests of pyrolysis to the extractor (unit M). Thus the solid rests of products of pyrolysis in the beginning are cooled by water down to 80 °C (175 °F), and then during 1-1.5 hour agitating with hot water there is a dissolution of calcium chloride (CaCl2) and extraction of ions of metals, including radioactive, from pores of solid particles. As far as calcium sulfate (CaSO4) - the gypsum received in processing of refuse together with acid tars is badly dissolves in water (∼ 2 g/L of water), its hit in an end-product - calcium chloride as an impurity possible only in insignificant Quantity (up to 1 %). The optimum ratio of extraction water to the solid rests of pyrolysis is 2:1, that corresponds to a degree of the extraction of heavy metals more than 90 %. Then the water together with the salts dissolved in it goes via line 25 into an unit Q where allocation of salts of heavy metals is carried out by known technique, for example, in two stages: in the beginning adsorption on coal or coke and then by electrocoagulation. The degree of extraction of heavy metals by such as method is not less than 99.9 %. The heavy metals allocated in the unit Q as a concentrate go to a warehouse of finished goods.

Cleared from salts of heavy metals solution 26 containing calcium chloride again goes on extraction in the unit M. Part of a circulating solution (approximately 25 %) are constantly picking out via line 27 into an unit T for reception of dry calcium chloride. This process is carried out by standard method on a spray dryer, a screw dryer and a cooler. Necessary heat is brought with final chimney gases 5 after heating up of air 4 and receptions of moist saturated steam 45 in the heat recovery boiler of the unit K, and cooling by the turnaround water 8 coming from the cooling tower X. The manufacturing dry solid calcium chloride goes to a warehouse of finished goods.

The exhaust moist chimney gases 28 after drying calcium chloride (unit T) move in the unit U for manufacture of slag concrete products. The part of these gases via line 29 goes according to thermal balance of system, i.e. with that quantity of heat which can be used applying the high-temperature organic heat-carrier 14 heated up in the unit D on a stage of reception of liquid carbon dioxide (unit W). It is applied standard an absorption-desorption method with use of a solution of monoethanolamine. Chimney gases before isolating from them carbon dioxide (CO2) are cooled down to 35-40 °C (95-105 °F) by turnaround water 8, the condensate allocated at it 30 is used for additional feeding of turnaround systems of water supply of the extractor (unit M) and the cooling tower (unit X) . The exhaust chimney gases of 31 and 32 of the units U and W are blow out in a chimney (unit V). liquid carbon dioxide goes to a warehouse of finished goods.

Washed out in the extractor (unit M) solid products of pyrolysis 33 go to an unit P of a filtration (centrifugation). Filtrate 34 from a centrifuge mixes up with the extract 25 which have left the unit M and goes on a stage of allocation of salts of heavy metals (unit Q).

The washed solid products of pyrolysis 35 after centrifugation in the unit P proceed in an unit S where are dried by mixing with a part of the hot slag 36 leaving from the combustion chamber O. Water vapors 37 allocated from the mixer-dryer S are condensed in the condenser F. From the mixer-dryer S the hot dry mixture 38 of solid pyrolysis products and slag enter to the combustion chamber O for burning.

The slag 39 cleared of harmful impurity is cooled in the unit R down to 200 °C (390 °F) by air 21-22 and then to 70°C (160 °F) by cleared of salts of heavy metals solution of calcium chloride 26 and to 25 - 30°C (80 - 90 °F) by turnaround cooling water 8 coming from the cooling tower X. The calcium chloride solution 40 goes then in the unit M of extraction, and the slag via line 41 - to warehouse of finished goods or is sent the consumer.

Depending on local conditions all slag or its part come on manufacture of slag concrete products in the unit U via line 42. There via line 43 all components necessary for making slag concrete. The composition of mixes depends on local conditions, can vary over a wide range and consist, for example, of slag, Portland cement, gypsum and water (according to 260 kg (570 Lb), 37 - 87 kg (80 - 190 Lb) depending on mark of cement, 1.5 kg (3.3 Lb) and 23 - 27 L (6 - 7 Gal) counting upon 1 ton of refuse); slag, grinding brick breakage, limestone in addition sent to a pyrolysis furnace and water (according to 260 kg (570 Lb), 100 - 150 kg (220 - 330 Lb), 50 kg (110 Lb) and 80 L (21 Gal) counting upon 1 ton of refuse), etc. For acceleration setting and hardening of concrete calcium chloride (0.75 - 1.9 kg (1.65 - 4.2 Lb) on 1 ton of refuse) is used for what the part of a solution of calcium chloride (10-12 L (2.6 - 3.2 Gal) with concentration of 9.7% CaCl2) via line 44 moves in the unit U that in addition depending on a mix formulation on 15-45 % reduces water consumption on making of concrete.

For reduction of a production cycle, increase of physics-mechanical parameters of products, an possibility to use Portland cement with the lowered activity, lime-sandy and others low- activity astringent thermohumid processing of concrete is applied. The heating environment is damp final chimney gases 28 after the dryer of calcium chloride (unit T). For attaining relative humidity of gases up to 100% in the stream of chimney gases 28 via line 45 is injected the moist saturated steam of low pressure developed by the heat recovery boiler (unit K). In case of complexity of a choice of serially let out steam heat recovery boiler of required parameters it is used the vapor of mixer-dryers and extractor (on the circuit it is not shown). Recycling of waste final damp chimney gases reduces in 20 - 25 times the consumption of steam in comparison with the existing equipment, using steam for steaming concrete. A cycle of heat treatment: rise of temperature of concrete products up to 80 - 85 °C (175 - 185 °F) within 2 - 3 hours, isothermal curing of concrete at the specified temperature for 4 hours and cooling 2-3 hours. Depending on composition of concrete the cycle of heat treatment can easy be adjusted over a wide range. The exhausted chimney gases via line 31 are dumped in chimney (unit V). Exuded in the chamber of processing of concrete the condensate via line 46 comes back in the heat recovery boiler of the unit K, and surplus of a condensate goes for extraction in the unit M via line 47.

During start-up of the plant for warming up and stabilization of all streams, i.e. achievement material and thermal equilibrium of all processes is used preliminary produced fuel or additional fuel (fuel oil or fuel gas) going into the unit O via line 48.

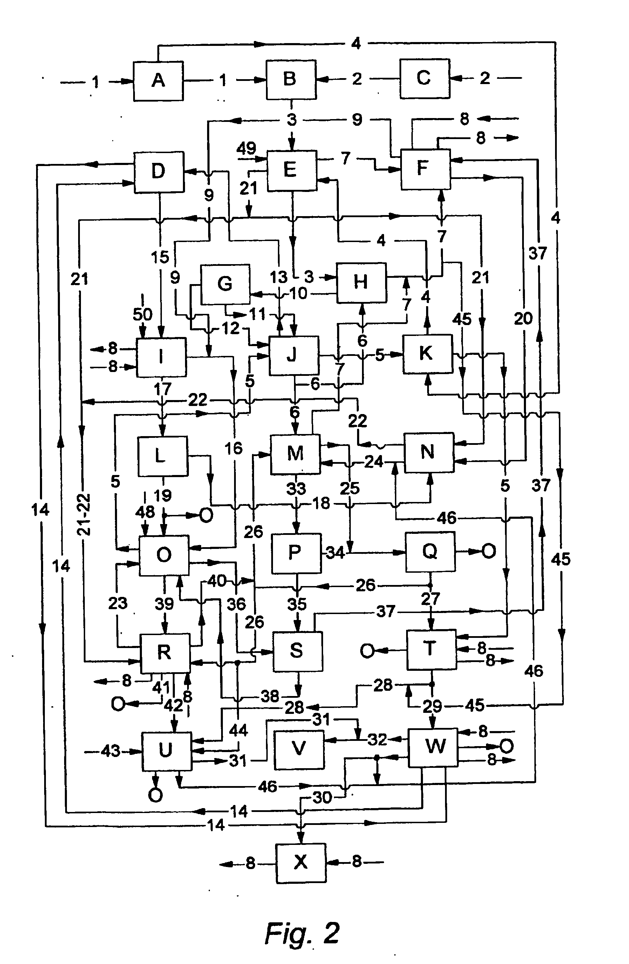

In FIG. 2 a block diagram of a waste- processing method without use of low-pressure moist saturated steam from the heat recovery is shown. Such a variant is necessary when cohoice of the specified steam heat recovery boiler of required parameters is complicated.

In this case for finishing relative humidity of gases up to 100 % in a stream of chimney gases 28 via lines 45 from lines 7 and 37, the part of vapor of mixer-dryers (units H and S) and an extractor (unit M) moves. During startup and stop of a plant, and also in case of infringement of a technological mode or emergencies, low-pressure steam 51 of the electric steam boiler is used. Such a decision considerably reduces the consumption of cooling water for condensation of the specified vapor in the condenser (unit F).

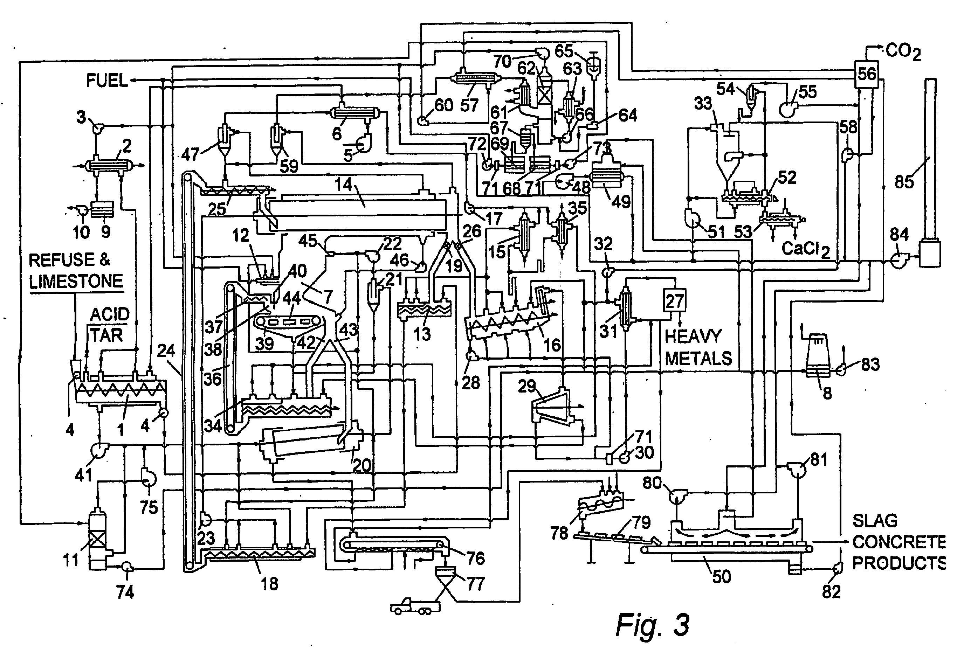

In FIG. 3, a flow diagram of one embodiment of a plant for processing wastes is shown. The plant works as follows. Known ways and on the known equipment preliminary prepared mixture of crushed municipal or similar refuse with limestone powder (on the circuit it is not shown) moved in the drying installation with heat transfer surface working under underpressure of 2-10 mm of water column (H2O) that excludes allocation of feel unwell smelling gases in an environment. At joint processing of refuse with the waste products containing substances capable immediately to react with limestone with emitting the products of reaction in an environment, for example, with the acid tars containing up to 70 % of the sulfuric acid move for processing directly in a dryer 1 where they first of all mix up, react with a limestone, and then move along a dryer are dried up. Installation consists of actually the dryer 1 supplied with a casing for the heat-carrier and internal shaft with blades putted on a screw line, a condenser 2 and a fan 3. At the input and output of a material from the dryer are installed a drum feeders 4 playing a role not only of batchers, but also gas sealers not admitting external air inleakage. For input of acid tars it is anticipated an additional branch pipe with the regulating gate. Screw blades provide intensive agitating, uniform warming up, moving along the device and packing of all volume of waste. The dryer 1 is warmed with air submitted by a fan 5 from branch of preparation of refuse (on the circuit it is not shown) through an air heater 6 where it is heated up by the final chimney gases of a combustion chamber 7, up to temperature 250 - 260°C (480 - 500 °F). Such low temperature of air excludes local overheating and premature decomposition in the dryer 1 chlorine-containing organic substances and warming of the dryer through a heating surface excludes contact of refuse and air without its pollution. The blowing rate of air is equal to requirement of process of burning in the combustion chamber 7 that provides its the further full use, excludes emission even parts of fulfilled the air in to an atmosphere.

Water vapor leaving the dryer 1 are condensed in the condenser 2 by turnaround water coming from a cooling tower 8 or the water used for heating and hot water supply of the plant and then by turnaround water of the specified cooling tower 8, condensate gathers in a tank 9 whence by a pump 10 flows to a scrubber 11 on blowing light organic impurity. Noncondenced gases are sucked away by the fan 3 and move in burners 12 of the combustion chamber 7.

The mix of refuse and limestone is dried up in the dryer 1 up to the intermediate humidity stipulate by quantity of heat brought in by hot air and initial humidity of refuse. Then the mix moves into a mixer-dryer 13 represented by the device in which parallel horizontal shafts with blades putted on a screw line is rotate. The drive of shafts is supplied with the speed rotation regulator. On an output of vapor it is installed the separation device. At rotation of shafts agitating, uniform warming up, transportation and final removal of a moisture from refuse is carried out due to mixing with a part of the solid rests of the pyrolysis leaving a furnace of pyrolysis 14 at temperature 450 - 500°C (840 - 930 °F). After full removal of water the temperature of a mix starts to grow quickly. To avoid decomposition of organic components of refuse in the mixer-dryer 13 completely drained mix is unloading into a neutralizer 18 at temperature no more than 110 - 115 °C (230 - 240 °F) that is provided with speed regulation of shafts rotation inside the device. Water steam allocated by a dryer are condensed in a condenser 15 by turnaround water coming from the cooling tower 8, condensate moves in an extractor 16. Noncondensed gases by a fan 17 go to the burners 12 of the combustion chamber. 7.

The first stage of pyrolysis is carried out without access of air into the neutralizer 18 which consist of the cylindrical case with branch pipes for an output of pyrolitic gases and the shaft built inside with blades putted on a screw line. Outside the case is supplied with a casing for hot air supply The incoming mix of refuse and limestone first of all is heated up. The heat-carrier consumption - the solid rest of the pyrolysis coining from the furnace of pyrolysis at temperature 450 - 500°C (840 - 930 °F) - is adjusted by a drum feeder 19 so that the temperature of a mix in the neutralizer 18 was established 220 - 250°C (430 - 480 °F) that provides full decomposition of chlorine- containing organic components of refuse. Besides presence of the solid rests of pyrolysis protects pyrolysis material from clotting and sticking to walls of the equipment. For compensation of losses of heat in to an environment the part of air which has been heated up in a cooler of slag 20 up to temperature 260 - 270 °C (500 - 520 °F) after a cyclone 21 by a fan of hot blasting 22 moves by a countercurrent in a casing of the neutralizer 18 and then again is dumped into the cooler of slag 20. Thus at constantly maintained temperature of a mix is not lower 220 °C (430 °F) the first stage of pyrolysis is carried out: all chlorine contained in refuse turnes into hydrogen chloride (HCl) which there and then practically at the moment of allocation reacts with limestone powder forming calcium chloride (CaC12) and thus all chlorine is removing from process. Dechlorinated gases of the pyrolysis, received in the neutralizer 18 move into the furnace of pyrolysis 14 by a forced draft fan 23. Dechlorinated solid products of pyrolysis by an elevator 24 and a screw feeder 25 also go to the furnace 14 where the second stage of pyrolysis of refuse proceeds.

The furnace of pyrolysis 14 represents a drum rotating furnace with external heating by the chimney gases coming from the combustion chamber 7 located below External and internal surfaces of the drum are supplied with spiral edges that increases a surface of heat exchange and intensifies process of pyrolysis by the shovelling of a material. Process proceeds without access of air at temperature 450 - 500 °C (840 - 930 °F). For excluding of air and chimney gases inleakage into volume of the furnace of pyrolysis, it works under pressurization, i.e. at superfluous pressure 5-15 mm of H2O created by the fan 23, sending gases of pyrolysis from the neutralizer 18. Thus polychlorinated dibenzodioxins, -furanes and -biphenyls are not formed because process is conducted without access of oxygen, and all chlorine has been removed from processable refuse as far as at the previous stage of pyrolysis in the neutralizer 18.

The solid rests of products of pyrolysis are removed from the furnace 14 into the mixer - dryer 13 and the extractor 16. The ratio of consumption depends on temperature of a mix in the neutralizer 18 and is adjusted by number of revolutions of drums of the feeders 19 and 26. Washing of the solid rests of pyrolysis in the extractor 16 is carried out by the water circulating through an installation 27 for water treating from heavy metals. Thus in the extractor during 1-1.5 hour agitating with hot water there is a dissolution of calcium chloride (CaCl2) and extraction of ions of metals, including radioactive, from pores of solid particles. In processing of refuse together with acid tars the formed gypsum practically is not dissolved in washing water, leaves from the extractor together with washed solid products of pyrolysis, goes into the combustion chamber 7 and is deduced from process together with slag. The solid rests of pyrolysis goes into the bottom part of the extractor which case is inclined to 10 - 15° to horizon. Rotating screw moves up solid phase to the top end of the device, mixing it with water, loosening and crushing that creates big and equally accessible for hot water surface of contact. Water is entered at the opposite end of the device and after passage through all its length leaves through netted baffle plate on intake of a pump 28, the part of water recirculate into a bottom of the device, then to avoid formation of stagnant zones on its bottom. Other water with dissolved salts of heavy metals and calcium chloride together with a filtrate from a centrifuge 29 through a cartridge filter 71 by a pump 30 through a heat-exchanger 31 moves in the installation 27 for water treatment from salts of heavy metals in which known, cheap and reliable combined method including water treatment with coal or coke with the subsequent electrocoagulation is used (on the circuit it is not shown). Such way allows to remove from water solutions 99.9 % of heavy metals contained in it.

Cleared from salts of heavy metals the solution is warmed up in the heat-exchanger 31 by leaving from the extractor 16 and the centrifuge 29 liquid submitted by the pump 30 and then again goes in the extractor 16. The part of the circulating solution (approximately 25 %) by a pump 32 moves in a spray dryer 33 for manufacture of the calcium chloride.

Water vapors leaving the extractor 16 are condensed in the condenser 15 by turnaround water coming from the cooling tower 8, condensate comes back into the extractor 16. Noncondensed gases by the fan 17 move in the burners 12 of the combustion chamber 7.

The solid phase by the rotor device of the extractor 16 is unloading in the bowl centrifuge 29 with automatic screw unloading of a sediment which humidity depending on the division factor of the established centrifuge makes 6 - 15 %. The subsequent drying of the damp washed from heavy metals salts and calcium chloride solid products of pyrolysis is carried out in a mixer-dryer 34 due mixing with the hot - 1150 °C (2110 °F) slag leaving from the combustion chamber 7. The design of the mixer-dryer 34 is similar to design of the device 13, leaving water vapor are condensed in a condenser 35 by the turnaround water coming from the cooling tower 8, condensate goes to the extractor 16. Noncondensed gases by the fan 17 move in the burners 12 of the combustion chamber 7. The drained mix of the washed solid products of pyrolysis and slag at temperature 101 *-* 102 °C (214 - 216 °F) by an elevator 36 and a screw feeder 37 goes to a bunker 38 of the combustion chamber 7 located below the rotating furnace of pyrolysis 14.

In working volume of the combined grate- fired combustion chamber 7 gaseous and liquid products of pyrolysis of refuse are burnt, noncondensed gases from the condenser installations are deodorizing and burning. The solid washed out products of pyrolysis, basically the carbon, are burning in layer on a moving chain-grate stoker of a direct course 39. Thickness of layer is adjusting by a gate 40. While move in depth of the combustion chamber on slowly movable grate bar surface solid products of pyrolysis are heat up, ignite and burn out then slag is dump into the mixer-dryer 34 and the cooler of slag 20 where it is cooled by air forced by a fan 41. The ratio of consumptions of slag in the apparatuses 20 and 34 adjust by position of gates 42 and 43, and, the gate 42 provides such consumption of hot slag at which the temperature of a mix on an output from the mixer-dryer 34 is established 101 -102°C (214 - 216 °F) that indicates about full removal of a moisture from a mixture coming on the grate bar lattice 39 of the combustion chamber 7. Other mass of slag goes in the cooler 20 whence air which has been heated up to temperature 260 - 270°C (500 - 520 °F) through the cyclone 21 by the fan 22 in each of zones is blow through blast tuyeres 44 under the grate bar lattice 39, into the burners 12 and air nozzles 45.

Work of the combustion chamber is carried out on a method of three-stage burning. This is method of decrease of nitrogen oxides emission differs that it does not reduce formation NOX, but restores already formed nitrogen oxides. The essence of a method consists that in the combustion chamber 7 is higher than the grate bar surface of lattice 39 the burners 12 working with lack of air (60 - 85 % from stoichiometrical) are established. As a result products of incomplete combustion which serve as gases - reducers are formed. Interaction of these gases with the nitrogen oxide, formed at burning solid waste products of pyrolysis in layer on grate bar surface of the lattice 39 results in reduction of nitrogen oxides (NO) up to molecular nitrogen (N2) . Regulation of air supply in the burners 12 is correcting depends on the content of nitrogen oxides in final chimney gases of the combustion chamber 7. Above the burners 12 burning liquid and gaseous products of pyrolysis are located the nozzles 45 of sharp blasting through which air for afterburning products of incomplete combustion moves. Thus, the volume of the combustion chamber as though shares in height on a zone of burning of the solid washed out rests of the pyrolysis coming on grate bar of lattice 39, a zone of secondary burning and reduction of nitrogen oxides and a zone of tertiary burning - afterbumings of products of incomplete burning from the second zone. Application of this method allows to lower emissions of nitrogen oxides (NOX) more than on 60 % in comparison with traditional methods of burning. Formed in the furnace of pyrolysis 14 in connection with absence of oxygen carbon oxide (CO) afterburning in the combustion chamber 7 up to carbon dioxide (CO2). Neutralization of hydrogen chloride (HCl) allocated at the first stage of pyrolysis excludes its inflow in the combustion chamber 7 and, accordingly, formation in it chlorinated dioxins, furanes, and biphenyls. The part of not burned down solid products of the pyrolysis which falling through the grate bar, gets in the bunker 38 located under the grate bar of lattice 39, and then through the mixer-dryer 34 by the elevator 36 and the screw feeder 37 again move in the bunker 38 of the combustion chamber 7. The carried away fine particles of soot, slag and ashes subsided at the end of the furnace of pyrolysis 14 come back in a slag pocket of the combustion chamber 7 by a fan of ablation 46. Fuel from extraneous sources moves in the burners 12 only in start-up period of the plant.

Final chimney gases of the combustion chamber 7 at temperature 1150 - 1250 °C (2100 - 2280 °F) go on heating of the furnace of pyrolysis 14 after which pass through a cyclone 47 where it are cleared from the carried away dust. Dust collected in the cyclone 47 goes in the screw feeder 25 and then in the furnace of pyrolysis 14. From the cyclone 47 chimney gases at temperature 620 - 650 °C (1150 - 1200 °F) come in the air heater 6 where heat up air, used as the heat-carrier in the dryer 1 and then at temperature 450 - 470 °C (840 - 880 °F) by an exhauster 48 go to a heat-recovery boiler 49 for formating moist saturated steam, used in a chamber 50 of thermohumid processings of concrete. Final chimney gases of the heat recovery boiler 49 at temperature 350 - 400 °C (660 - 750 °F) by an exhauster 51 move on drying of a solution of calcium chloride, and, the most part of gases go in the spray dryer 33, the rest of gases - in a screw dryer 52 for to finish drying of the solution. The blowing rate of gas on the devices 33 and 52 is supported automatically by system of the block of ratio of streams under the indication of temperatures of the chimney gases on an output from the spray and the screw dryers - 110 °C (230 °F). The initial solution with concentration of 7 - 12 % of calcium chloride (CaCl2) is evaporated in the spray dryer up to 50 - 70 % of concentration and flows down in the screw dryer 52 where due to heat of the chimney gases coming in the beginning in a jacket and then in a screw zone of the dryer itself, it is completely dried up to residual humidity no more than 0.5 % and then goes on cooling in a screw cooler 53 and then unloading in a warehouse of finished goods. Cooling is carried out by turnaround water from the cooling tower 8.

The moist chimney gases after drying of calcium chloride go to a cyclone 54 where are separated from carried away drops of a solution and by an exhauster 55 moves into the chamber 50 for thermohumid processings of concrete and an installation 56 for manufacturing of carbon dioxide. This installation works by the standard absorption - desorption method of reception of carbonic acid from the chimney gases with the help of the monoethanolamine (on the circuit it is not shown). Quantity of the gases coming for manufacturing of carbonic acid and, accordingly, productivity of installation it is limited to thermal balance of system, i.e. that quantity of heat which can be used applying for heating of a desorber of the installations 56 heated up in a heat exchanger 57 high-temperature organic heat-carrier, for example, based on ethylene glycol. The condensate received at cooling of chimney gases from 110°C (230 °F) down to 40°C (105 °F) before an absorber of the installation 56 is used for additional supplying turnaround system of water supply of the cooling tower 8 and other needs of the plant. The chimney gases cleared from carbon dioxide (CO2) by an exhauster 58 are dumped in the common gas flue of final chimney gases of the plant. Thus, the content of carbon dioxide in the chimney gases dumped in an atmosphere in comparison with incinerate factories is reduced more than on 64 % because the part of carbon remains in the commodity liquid fuel, the given technology does not use additional fuel and a part of formed carbon dioxide is manufacture as the commodity product.

The pyrolitic gas from the furnace 14 at temperature 450 - 500°C (840 - 930 °F) flows in a cyclone 59 where it is cleared from the carried away dust which returns by the screw feeder 25 back into the furnace of pyrolysis 14. Then pyrolitic gas goes in the horizontal heat exchanger 57 where heats up to temperature not less than 150 - 160 °C (300 - 320 °F) the high-temperature organic heat-carrier, for example, based on ethylene glycol which by a pump 60 moves to heat the desorber of the installation 56. Cooled down pyrolitic gas goes in a vertical tubular heat exchanger 61 where its condensation by turnaround water from the cooling tower 8 and in a scrubber - chemisorber 62 for final condensation and clearing of gases and vapors is carried out by an irrigation of its own condensate cooled in a vertical heat exchanger 63 by turnaround water from the cooling tower 8. In case of disturbance of a technological mode when increase of acidity of a pyrolitic gas condensate is possible for neutralization of sour impurity by a metering pump 64 from a tank 65 supplied with an anchor mixer automatically under an indication of pH-meter moves a neutralizing solution. Circulation of a condensate is carried out by a pump 66. Simultaneously the condensate from the scrubber - chemisorber 62 goes into a separated vessel (oil sump) 67 where it is segregate on water and organic phases which accumulate in corresponding tanks 68 and 69. The noncondensed part of pyrolitic gas by a fan 70 goes on burning to the burners 12 of the combustion chamber 7. The organic phase of a condensate of a pyrolitic gas from the tank 69 through a cartridge filter 71 by a pump 72 in part goes as fuel to the warehouse of finished goods and in part - to the burning in the burners 12 of the combustion chamber 7. The water phase from the tank 68 through the cartridge filter 71 by a pump 73 moves to blow away from light organic substances in the scrubber 11 which is carried out by a part of hot air (- 5 %) supplied by the fan 41. The sediment from the cartridge filters 71 periodically during clearing pores filtering elements moves in the combustion chamber 7 (on the circuit it is not shown) . The temperature of air delivering in the scrubber is 105 -110°C (220 - 230 °F). Blow off from a great bulk of organic products the water phase from the scrubber 11 by a pump 74 goes on a stage of washing of the solid rests of pyrolysis to the extractor 16. Air sated with organic products and a moisture by a fan 75 moves to mix with the main stream of air leaving the dryer 1. The mix of streams goes in the cooler of slag 20 where is heated up to temperature 260 - 270°C (500 - 520 °F), passes through the cyclone 21 and by the fan 22 of hot blasting is dumped in the combustion chamber 7 and a casing of the neutralizer 18. Carried away by stream of air fine particles of slag collected in the cyclone 21 and through the mixer- dryer 34 come back in the combustion chamber 7.

Slag from the combustion chamber 7 at temperature 1100 - 1150 °C (2010 - 2100 °F) goes into the drum cooler of slag 20. The drum is installed under angle of 4 - 6° to horizon and rotates with a speed 3- 6 rev/min. The motionless end face entrance of the slag cooler and 15 - 25% of the rotating drum length on the part of the input of slag lining by the firebrick with fire resistance not less then 1300 °C (2370 °F), other part is supplied with internal nozzles for pouring slag that helps it shoveling, the best air flow and crushing of the caked pieces. Owing to rotation of the drum slag goes to it unloading end being cooled down to temperature 200 °C (390 °F) by air coming towards which is heated up from 105 - 110 °C (220 - 230 °F) up to 260 - 270 °C (500 - 520 °F) . If for reception of the slag concrete products it is required in uniformly crushed slag, steel or ceramic spheres in diameter 100 - 150mm are loaded into a cooler of slag 20 used as the crushing agent. The volume occupied by spheres makes 10 - 15% of working volume of the drum limited on the part of an output of slag by a cross lattice. Then slag gets in a scraper conveyer 76 located in the case supplied with surfaces of cooling in which the solution of calcium chloride cleared from salts of heavy metals and turnaround water of the cooling tower 8 circulates cooling slag accordingly down to 65 - 70 °C (150 -160 °F) and 25 - 30 °C (80 - 90 °F). The cooled slag cleared of heavy metals and sulfur moves in a bunker 77 whence depending on local conditions is sent to the consumer or to manufacture of the slag concrete products.

Installation for reception of slag concrete products includes a concrete mixer 78 where move slag and the solution of calcium chloride made by the given technology all necessary components deliver, for example, Portland cement, grinded brick breakages, gypsum, etc. received from extraneous sources. The composition of mixes depends on local conditions and can vary over a wide range. The received mix goes for modeling and compaction on a vibration platform 79 and then moves in the chamber 50 of thermohumid processing, of concrete products which represents the tunnel with the band conveyer located inside on which the concrete products formed earlier slowly move. For adjustment of speed of movement of a band the drive of the conveyer is supplied with a regulator of speed. Inside the tunnel is waterproofing and heat insulated. The floor is made with a bias aside pit for gathering a condensate. In the top part in the beginning and the end of the tunnel branch pipes for an exit of chimney gases and in the center - a branch pipe for an entrance of damp chimney gases after the dryers of calcium chloride 33 and 52 in a mix with moist saturated steam from the heat recovery boiler 49 are located. Exhausters 80 and 81 mounted on exits of chimney gases are supplied with axial directing devices and two speed electric motors that provides effective regulation of productivity in the big range of loading.

Work of the chamber 50 is carried out as follows. Simultaneously with loading of concrete products into the chamber coming damp chimney gases at temperature 110°C (230 °F). To reach relative humidity of gases up to 100 % it is injecting moist saturated steam from the heat recovery boiler 49. Thus, inside the chamber the damp inert environment capable to speed up all processes directed on full maturing of concrete is established. Adjusting productivity of the exhausters 80 and 81 inside the chamber different intensity of streams of steam and gas mixes along the line concrete products is established and, accordingly, their temperature mode of heating, ageing and cooling is adjusting. The condensate allocated from a steam and gas mix goes in the pit of the chamber of processing of concrete and by a pump 82 moves in the extractor 16 and in turnaround system of the water cooling tower 8 supply. Circulation of water in turnaround system is carried out by a pump 83. The exhaust chimney gases are dumped in flue duct of final gases of the plant and then by an exhauster 84 in a chimney 85.

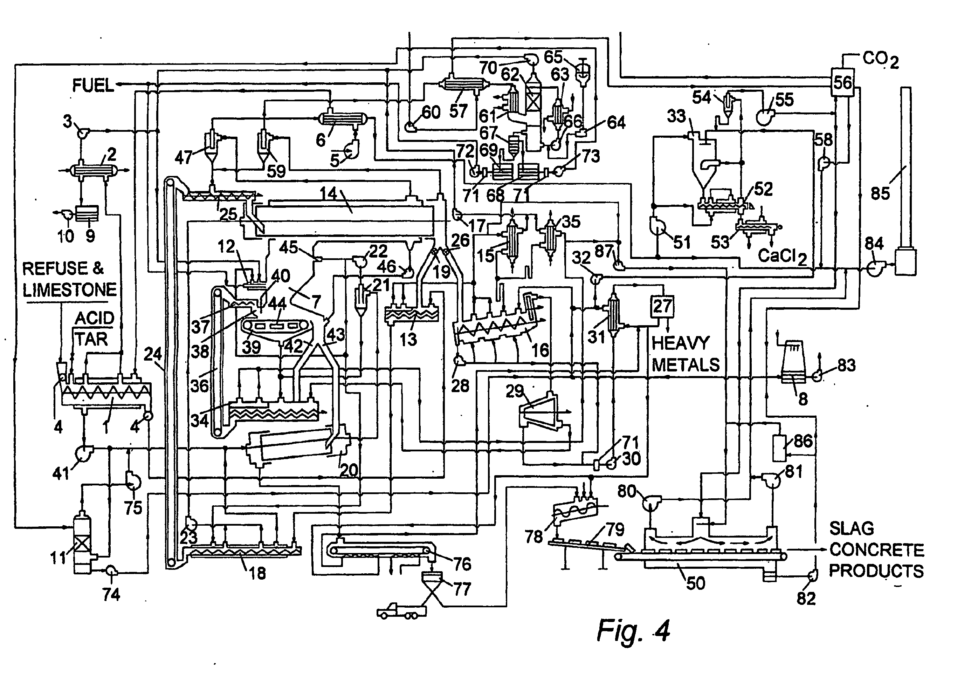

In FIG. 4, a flow diagram of a second embodiment of a plant for processing wastes without the heat recovery boiler for reception of the low pressure moist saturated steam is shown. Such variant is necessary when the choice of serially manufactured steam heat recovery boiler of required parameters is complicated. In this case an electric boiler 86 of corresponding productivity connected by system of pipelines on the part of an input of a condensate through the pump 82 with pit of a condensate and on the part of an output of a steam with section of mixting of the chamber 50 of thermohumid processings of slag-concrete products is installing. The electric steam boiler 86 is intended for work during start-up and a stop of a plant. During the established operating mode it is used vapor of the mixer-dryers 13 and 34 and also the extractor 16 which by a fan 87 moves in the chamber 50 of thermohumid processings slag-concrete products. Such decision considerably reduces the power inputs connected to manufacture steam and the consumption of cooling water on condensation of the vapor in the condensers 15 and 35.

## Claims

1. A method for processing of wastes comprising the steps of :
1.1 removal from solid waste large objects which cannot be grinded;
1.2 removal of ferrous metals, aluminium and a glass by known ways if it is required by local conditions and economic reasons, though the technology itself does not demand it;
1.3 grinding of refuse and limestone, mixing mentioned crushing solid waste with limestone powder for forming of pyrolysis mixture in the weight ratio, dependent on the contents in waste products of substances capable to react with limestone and from variant of further use of received then slag;
1.4 in case of joint processing of refuse with the waste products containing substances capable to react with the limestone with emitting the products of reaction in an environment, for example, with acid tars move for processing directly in the first stage of drying;
1.5 two stage drying specified pyrolysis mixture - in the beginning by the hot air which has been heated up due to utilization of heat of final chimney gases, and then due to mixes with a part of the hot solid rest of the pyrolysis removed from the rotating furnace of pyrolysis;
1.6 two stage pyrolysis without air access of specified pyrolysis mixture in the beginning due to mixing with a part of the hot solid rest of the pyrolysis removed from the furnace of pyrolysis with simultaneous neutralization by a limestone powder of allocated hydrogen chloride and reception of calcium chloride and then passage dechlorinated pyrolitic mixture and the pyrolitic gas received at the first stage along a rotating drum of the furnace in one direction for final pyrolysis with reception the pyrolitic gas and the solid rests of pyrolysis due to heating by chimney gases of combustion chamber;
1.7 heating by gases of pyrolysis the high temperature organic heat-carrier, for example, based on ethylene glycol used then as the heating agent at reception carbon dioxide from the final chimney gases;
1.8 condensation of gases of pyrolysis with the subsequent division into the water phase of coming to blow away from organic impurity by hot air after drying by it of solid waste and an organic phase used as commodity fuel and fuel for own needs;
1.9 washing of other part of the solid rests of the pyrolysis removed from the rotating furnace of pyrolysis by the specified water phase of a condensate of pyrolitic gas for dissolution of calcium chloride and extraction of ions of metals, including radioactive, from pores of solid particles of waste products with the subsequent allocation of heavy metals as commodity product, for example, adsorption at a coal or coke and then by electrocoagulation;
1.10 centrifugation the washed solid rests of pyrolysis with moving of the received filtrate for extraction of ions of heavy metals from waste products and the solid rests for drying due to mixing with a part of the hot slag leaving from combustion chamber;
1.11 burning of the washed solid rests of pyrolysis, gaseous and liquid products of pyrolysis and noncondensed gases, afterburning carbon monoxide (CO) up to carbon dioxide (CO2) with reception of slag and chimney gases, the subsequent heat utilization of the specified gases and slag for other technological processes;
1.12 reception of the moist low pressure saturated steam due to heat utilization of final chimney gases or use of vapor of a mixer-dryers and an extractor for finishing relative humidity of the chimney gases going for thermohumid processing of the slag-concrete products up to 100 %;
1.13 constant removing of a part of the washing water cleared of heavy metals (a liquid phase) for reception of dry calcium chloride due to drying by final chimney gases;
1.14 cooling of slag and sending to its consumer or for manufacture a slag concrete products;
1.15 thermohumid processing of slag concrete products by damp final chimney gases after drying calcium chloride in a mix with moist saturated steam of low pressure.

2. The method defined in claim 1 wherein in step 1.3. at direct sending the cooled slag to the consumer the weight ratio of limestone to solid waste is from 1:5 till 1:20 depending on the contents of chlorine in solid waste, at processing solid waste together with acid tars additionally supplies a limestone in the amount dependent on the contents of the sulfuric acid in tars and in case of using the slag to manufacture slag-concrete products additionally supplies a limestone in the amount dependent on a compounding of a concrete mixture.

3. The method defined in claim 1 wherein in step 1.4 the optimum weight ratio of waste products with acid tars makes from 5:1 up to 10:1 depending on the contents of a sulfuric acid in tars.

4. The method defined in claim 1 wherein in step 1.5 the first stage of drying is carried out by air which has been heated up to 250 - 260 °C (480 - 500 °F) which consumption is defined by need of process of burning in combustion chamber, and the second stage - due to heat utilization of a part of the solid rest of the pyrolysis going for mixing at temperature 450 - 500 °C (840 - 930 °F), and the temperature of the drained mixture at the output should not exceed 110 - 115 °C (230 - 240 °F).

5. The method defined in claim 1 wherein in step 1.6 the first stage of pyrolysis is carried out at temperature 220 - 250 °C (430 - 480 °F) , and the second stage - at temperature 450 - 500 °C (840 - 930 °F).

6. The method defined in claim 1 wherein in step 1.7 the high-temperature organic heat- carrier, for example, based on ethylene glycol is heated up to temperature not less then 150 -160 °C (300 - 320 °F).

7. The method defined in claim 1 wherein in step 1.8 the temperature of air going to blow away the light organic substances from a water phase is 105 -110 °C (220 - 230 °F), and the air consumption is 5 - 6% total air blasting in combustion chamber.

8. The method defined in claim 1 wherein in step 1.9 the optimum ratio of extraction water to the solid rest of pyrolysis is 2:1, duration of the extraction at temperature of water 80 °C (175 °F) is 1 - 1,5 hours.

9. The method defined in claim 1 wherein in step 1.10 humidity of the solid rest after a centrifuge going for mixing with the hot slag which has temperature 1150 - 1200 °C (2100 - 2190 °F), is 6 - 15%.

10. The method defined in claim 1 wherein in step 1.11 with the purpose of decrease of nitrogen oxides emission the combustion chamber works by three-stage burning method when the volume of chamber conditionally shares on height in a zone of burning of the solid washed out rests of pyrolysis on a chain-grate stocker, a zone of secondary burning when burners for burning liquid and gaseous products of pyrolysis work with lack of submitted air therefore products of incomplete combustion which serve as gases reducers of nitrogen oxides (NO) up to molecular nitrogen (N2) and a zone of tertiary burning - afterburning of products of incomplete burning from the second zone are formed, and as sharp blasting is used air which has been heated up in a cooler of slag up to temperature 260 - 270 °C (500 - 520 °F) that simultaneously provides afterburning of formed because of the oxygen lack in the furnace of pyrolysis carbon monoxide (CO) up to carbon dioxide (CO2).

11. The method defined in claim 1 wherein in step 1.11 burning is carried out at temperature not above 1250 °C (2280 °F) thus decrease of temperature of the received chimney gases due to utilization of heat is carried out consistently at pyrolysis on item 1.6 mainly up to 620 - 650 °C (1150 - 1200 °F), heating of air for the first stage of drying of pyrolysis mixture on step 1.5 mainly up to 450 - 470 °C (840 - 880 °F), reception of the low pressure moist saturated steam on step 1.12 mainly up to 350 - 400 °C (660 - 750 °F) and drying of calcium chloride on step 1.13 mainly up to 110 °C (230 °F).

12. The method defined in claim 1 wherein in step 1.13 intake of washing water for manufacture of calcium chloride makes approximately 25 % of the general consumption.

13. The method defined in claim 1 wherein in step 1.14 cooling of slag is carried out in three stages: by the air down to temperature 200 °C (390 °F), by the solution of calcium chloride to 70 °C (160 °F) and by turnaround water from the cooling tower to 25 - 30 °C (80 - 90 °F), thus the air is heated up to 260 - 270 °C (500 - 520 °F).

14. The method defined in claim 1 wherein in step 1.15 the thermohumid processing of slag concrete products is carried out as follows: rise of temperature up to 80 - 85 °C (175 - 185 °F) within 2 - 3 hours, isothermal curing of concrete at 80 - 85 °C (175 - 185 °F) - 4 hours and cooling 2 - 3 hours, and, depending on composition of concrete the cycle of thermohumid treatment can easily be adjusted over a wide range. The working agent are damp chimney gases after drying the calcium chloride, 100 % attaining with relative humidity due to injection of the low pressure moist saturated steam.

15. A plant for processing of wastes comprising the steps of:
15.1 a dryer with heat-transfer surface supplied with a casing for the heat-carrier, internal shaft with blades mounted on a screw line for mixing, moving and tightening of pyrolysis mixture, the drum feeders installed at input and output of the specified mixture, an additional branch pipe with the regulating gate for submission of acid tars, connected by system of pipelines from the part of an output of vapor with condenser installation, an input of the heat-carrier - with the air heater installed in chimney of final chimney gases of a plant, and from the part of an output- with the fan feeding an air in a scrubber for blow away a condensate from an impurity the organic substances and the cooler of slag located below combustion chamber;
15.2 a condenser installation for vapor of a dryer supplied with the condenser, the fan, the tank of a condensate and the condensate removal pump connected by system of pipelines on the part of an input of vapor with a dryer, an output of a condensate - with a scrubber to blow away of a condensate from an impurity of organic substances by air coming after heating of a dryer, and an output of noncondensed gases through the fan with burners of combustion chamber;
15.3 a mixer-dryer supplied with parallel horizontal shafts with speed rotation regulator and blades mounted on the screw line carrying out final drying of specified pyrolysis mixture due to mixes with a part of the solid rests of pyrolysis and connected by the pipeline with a drum feeder on the part of an input of the solid rests of pyrolysis with the furnace of pyrolysis, system of pipelines for pyrolysis mixture on the part of an input with a dryer, on the part of an output of the drained mixture with neutralizer, on the part of steam output- with the condenser and an extractor, and noncondensed gases - through the fan with burners of combustion chamber;
15.4 an installation for washing other part of the solid rests of the pyrolysis leaving the rotating furnace of pyrolysis supplied with the extractor which body keeps on a branch pipes of input and output of the solid rest of pyrolysis and washing water, output of vapor and an input of a condensate, an internal shaft with blades mounted on a screw line for mixing and movings of a product to a countercurrent to coming washing water and rotating device for a unloading of the washed rests of pyrolysis, pumps, the condenser, the fan and a settling centrifuge with an automatic unloading of the deposit connected by system of pipelines thus, that the extractor an input of the rests of pyrolysis connected through a drum feeder to the furnace of pyrolysis, and on an output - with a centrifuge, on an output of vapor - with the condenser, the condensate from which again comes back in an extractor, and noncondenced gases by the fan move in the burners of combustion chamber, and, the centrifuge via line of filtrate through the pump and heat exchanger is consistently connected with installation for clearing of liquids from heavy metals and with an extractor, and via line of deposit - with the mixer-dryer installed under a furnace;
15.5 a neutralizer supplied with branch pipes for an output of gases of pyrolysis, a casing for feed of hot air and the shaft built in inside with blades mounted on the screw line providing the first stage of pyrolysis with simultaneous neutralization of hydrogen chloride and reception of the calcium chloride connected on the part of an input of pyrolysis mixture with the mixer-dryer, on an output - through elevator and screw feeder with the rotating furnace of pyrolysis, and, branch pipes of an output of pyrolitic gas by system of pipelines through the fan are connected to the furnace of pyrolysis, branch pipes of a casing on an input of air are connected with the forced draft fan and on an output - to a cooler of slag;
15.6 a furnace of pyrolysis of the organic products contained in pyrolysis mixture supplied with a rotating drum with external heating by chimney gases of combustion chamber, external and internal ribbing surfaces, motionless loading and unloading the end faces connected on the part of an input with a screw feeder of a mixture and with a forced draft fan of gas of pyrolysis from neutralizer, on an output of the solid rests of pyrolysis through drum feeders with the mixer-dryer and an extractor, moreover on an output of chimney gases and gas of pyrolysis with the cyclones connected on an output of a dust of a product with a specified screw feeder;
15.7 a combustion chamber blocked with the furnace of the pyrolysis located below specified furnace and supplied with a moving chain-grate stocker for burning the washed out solid rests of pyrolysis, the burners located above of a grate bar surface for burning of liquid and gaseous products of pyrolysis and noncondensed gases, during start-up of a plant - reserve fuel and also air nozzles of the sharp blasting located above burners;
15.8 a condenser installation of the pyrolitic gas supplied with connected by the system of pipelines the cyclone, the heat exchanger for heating of the high temperature organic heat- carrier, the tubular condenser, the scrubber- chemisorber, the separated vessel, the tubular heat exchanger for condensate cooling, the circulating pump, the collecting tanks for water phase and organic fuel, the cartridge filters, the pump for feeding of a water phase in a scrubber for to blow away of organic impurity, the pump for feeding of liquid organic fuel in burners of combustion chamber and a warehouse of finished goods, the fan for feeding of noncondensed gases in burners of combustion chamber, and, at infringement of a technological mode for neutralization of acidic impurities anticipated installation of a tank with a mixer and the metering pump of neutralizing solution;
15.9 an installation for blowing away of the water phase of condensed products pyrolysis from the organic impurity, supplied with a scrubber filled with put on rings, the pump and the fans connected by system of pipelines at an input of hot air through the fan with a dryer, at an output through the fan with a cooler of slag, at an input of a water phase with condenser installation of a pyrolitic gas, and at an output through the pump with an extractor;
15.10 an installation for heat utilization of the final chimney gases supplied consistently connected with chimney a cyclone, air heater with the fan for air feeding, exhauster and the heat recovery boiler for moist low pressure saturated steam production connected at the input of chimney gases with the furnace of pyrolysis, and at the output with installation for reception of calcium chloride, and, the cyclone at an output of a dust is connected with a screw feeder of the furnace of pyrolysis, air heater at the input of air through the fan is connected to a place of preparation of waste products, at the output with a dryer, and the heat-recovery boiler is connected by a steam line to the chamber of thermohumid processings of slag concrete;
15.11 an installation for feeding of the moist saturated steam in the chamber of thermohumid processings of the slag concrete replacing in case of complexity of a choice serially manufacture heat- recovery boiler of required productivity and supplied with the electric steam boiler connected by the system of pipelines at the input of a condensate and an output of steam with the specified chamber of processing of slag concrete and the fan connected at the input of steam with pipelines for vapor of mixer-dryers and an extractor, and at the output of steam - with the specified chamber of processing 8lag concrete;
15.12 an installation for manufacturing the calcium chloride supplied with a spray and a screw dryers, a a screw cooler, exhausters and a cyclone connected by system of pipelines in such a manner that drying of a solution of calcium chloride is carried out due to heat utilization of final chimney gases in two stages: in the beginning in a spray, and then in a screw dryer with the subsequent cooling in a screw cooler, and, the consumption of the chimney gases, feed by the exhauster simultaneously in a spray dryer and a screw dryer is supported automatically by system of the streams ratio block, and final moist gases are released from drops of a solution in a cyclone and move to the installation for reception the carbon dioxide and to the chamber of thermohumid processings of slag concrete;
15.13 an installation for reception carbon dioxide from the chimney gases supplied with the equipment using a method of reception carbon dioxide with the help of the monoethanolamine, connected by system of pipelines at the input of the heating agent with the heat exchanger for heating of the high temperature organic heat-carrier, the scrubber - cooler of chimney gases before an absorber of the installation is connected by condensate pipe with cooling tower of plant and the exhauster of final gases - with chimney of final chimney gases of a plant and a chimney;
15.14 a mixer-dryer of the washed and filtered solid rest of the pyrolysis supplied with parallel horizontal shaft with blades put on the screw line carrying out drying the specified rest of pyrolysis due to mixing with other part of hot slag of combustion chamber and connected at the input with a centrifuge and through the gate with the combustion chamber, and at the output through an elevator and screw a feeder with the bunker of a combustion chamber, an output vapor - with the condenser and an extractor, and noncondensed gases through the fan - with burners of the combustion chamber;
15.15 an installation for cooling the slag supplied with the rotating drum cooler of slag which entrance part lining by the firebrick and connected through the gate to combustion chamber, other part of the drum has internal nozzles and steel or ceramic spheres for shoveling and crushing of slag, the scraper conveyer located in the case having surfaces of cooling and the bunker of the cooled slag, and, the drum cooler in a countercurrent to movement of slag is connected at an input of air through the fan with the dryer, at an output through the cyclone with the forced draft fan, surfaces of cooling of the conveyer are connected to the pipeline of the calcium chloride solution cleared of heavy metals and to turnaround system of cooling tower and the bunker of the cooled slag - with a warehouse of manufacture goods and with installation for reception of a slag concrete;
15.16 an installation for reception of a slag concrete products supplied with a concrete mixer for reception of a concrete mixture of necessary composition, a vibration platform for modelling and compaction of the specified mixture, exhausters, a condensate removal pump and the chamber of thermohumid processing connected by system of pipelines at an input of the heat-carrier with installation for reception of calcium chloride and the heat recovery boiler, at an output through exhausters with chimney of final chimney gases of a plant and a chimney, and at an output of a condensate - through a condensate removal pump with turnaround system of water supply of cooling tower and an extractor.

## Patentansprüche

1. Ein Verfahren zum Verarbeiten von Abfällen, umfassend die Schritte von:
1.1 Entfernen großer Objekte aus Feststoffabfall, die nicht gemahlt werden können;
1.2 Entfernen von eisenhaltigen Metallen, Aluminium und Glas auf bekannte Weise, wenn es durch lokale Bedingungen und aus ökonomischen Gründen erforderlich ist, obwohl die Technologie selbst dies nicht verlangt;
1.3 Mahlen von Müll und Kalkstein, Mischen des erwähnten zerkleinerten Feststoffabfalls mit Kalksteinpulver zum Bilden einer Pyrolysemischung in dem Gewichtsverhältnis, das abhängt von dem Gehalt von Substanzen in den Abfallprodukten, die in der Lage sind mit Kalkstein zu reagieren, und von verschiedenen Varianten der weiteren Verwendung der dann erhaltenen Schlacke;
1.4 im Fall gemeinsamer Verarbeitung von Müll mit den Abfallprodukten, die Substanzen enthalten, die in der Lage sind, mit dem Kalkstein mit Emittieren der Reaktionsprodukte in eine Umgebung zu reagieren, zum Beispiel mit Säureteeren, die zum Verarbeiten direkt in die erste Trocknungsstufe bewegt werden;
1.5 zweistufiges Trocknen aufgeführter Pyrolysemischung - am Anfang durch die heiße Luft, die aufgeheizt wurde durch Nutzung von Hitze der finalen Rauchgase, und dann aufgrund von Mischen mit einem Teil des heißen festen Restes der Pyrolyse, der aus dem rotierenden Pyrolyseofen entfernt wird;
1.6 zweistufige Pyrolyse ohne Luftzufuhr von aufgeführter Pyrolysemischung am Anfang aufgrund von Mischen mit einem Teil von dem heißen festen Rest der Pyrolyse, der aus dem Pyrolyseofen entfernt wird, mit gleichzeitiger Neutralisierung von gesammelten Chlorwasserstoff und Aufnehmen von Kalziumchlorid durch ein Kalksteinpulver und dann Übergang entchlorter Pyrolysemischung und des Pyrolysegases, das in der ersten Stufe erhalten wurde, entlang einer rotierenden Trommel des Ofens in eine Richtung für eine endgültige Pyrolyse mit Aufnehmen des Pyrolysegases und des festen Restes der Pyrolyse, aufgrund von Erhitzen der Rauchgase der Verbrennungskammer;
1.7 Erhitzen durch Pyrolysegase der organischen Hochtemperaturwärmeträger, zum Beispiel basierend auf Ethylenglykol, die dann als Heizmedium verwendet werden beim Aufnehmen von Kohlendioxid aus den finalen Rauchgasen;
1.8 Kondensieren der Pyrolysegase mit der anschließenden Trennung in die Wasserphase, von der organische Verunreinigungen durch heiße Luft weggeblasen werden, nach dem Trocknen von Feststoffabfall durch diese und einer organischen Phase, die als Treibstoff-Erzeugnis und Treibstoff für eigenen Bedarf genutzt wird;
1.9 Waschen von anderem Teil von dem festen Rest der Pyrolyse, der aus dem rotierenden Pyrolyseofen entfernt wird, durch die aufgeführte angegebene Wasserphase von einem Kondensat des Pyrolysegases zum Lösen von Kalziumchlorid und Auswaschen von Metallionen, beinhaltend radioaktive, aus Poren von festen Partikeln der Abfallprodukte mit der anschließenden Sammlung von Schwermetallen als Rohstoffprodukt, beispielsweise durch Adsorption auf einer Kohle oder Koks und dann durch Elektrokoagulation;
1.10 Zentrifugieren der gewaschenen festen Reste der Pyrolyse mit Bewegen des erhaltenen Filtrats zum Gewinnen von Schwermetallionen aus Abfallprodukten und der festen Reste zum Trocknen aufgrund von Mischen mit einem Teil der heißen Schlacke, die die Verbrennungskammer verlässt;
1.11 Verbrennen der gewaschenen festen Reste der Pyrolyse, gasförmigen und flüssigen Pyrolyseprodukte und nichtkondensierten Gase, Nachbrennen von Kohlenstoffmonoxid (CO) auf zu Kohlenstoffdioxid (CO2) mit Aufnehmen von Schlacke und Rauchgasen, die anschließende Hitzenutzung der aufgeführten Gase und Schlacke für andere technische Prozesse;
1.12 Aufnehmen von mit Feuchtigkeit gesättigtem Niederdruckdampf aufgrund von Nutzung von Hitze der finalen Rauchgase oder Nutzen von Dampf eines Mischungstrockners und einem Entnahmegerät zum Bearbeiten der relativen Luftfeuchtigkeit der Rauchgase, um thermohumide Prozessierung von den Schlackenbeton Produkten bis zu 100% anzustreben;
1.13 konstantes Entfernen eines Teils des von Schwermetallen (eine flüssige Phase) gereinigten Waschwassers zum Aufnehmen von trockenem Kalziumchlorid aufgrund von Trocknen durch finale Rauchgase;
1.14 Kühlen von Schlacke und Versenden an ihren Verbraucher oder zum Herstellen eines Schlackenbeton Produkts.
1.15 thermohumide Behandlung von Schlackenbeton Produkten durch anfeuchten finalen Rauchgase nach Trocken von Kalziumchlorid in einer Mischung mit Feuchtigkeit gesättigtem Niederdruckdampf.

2. Das Verfahren nach Anspruch 1, wobei in Schritt 1.3 bei direktem Befördern der gekühlten Schlacke an den Verbraucher das Gewichtsverhältnis von Kalkstein zu Feststoffabfall ist von 1:5 bis 1:20, abhängig von dem Gehalt an Chlor in Feststoffabfall, beim Verarbeiten von Feststoffabfall zusammen mit Säureteeren wird zusätzlich ein Kalkstein in einem Umfang bereitgestellt, der abhängig ist von dem Gehalt der Schwefelsäure in Teeren und im Falle von Verwendung der Schlacke, zur Herstellung von Schlackenbeton Produkte, wird zusätzlich ein Kalkstein in dem Umfang bereitgestellt, der von einer Zusammensetzung einer Betonmischung abhängt.

3. Das Verfahren nach Anspruch 1, wobei in Schritt 1.4 das optimale Massenverhältnis von Abfallprodukten mit Säureteeren in einem Bereich von 5:1 bis 10:1 liegt, abhängig von dem Gehalt einer Schwefelsäure in Teeren.

4. Das Verfahren nach Anspruch 1, wobei in Schritt 1.5 die erste Trocknungsstufe wird durchgeführt durch Luft, die aufgeheizt wurde auf 250 - 260 °C (480 - 500 °F), deren Verbrauch definiert ist durch Bedarf des Verbrennungsprozesses in der Verbrennungskammer, und die zweite Stufe - aufgrund von Nutzung von Hitze von einem Teil des festen Restes der Pyrolyse, um Mischen bei Temperatur von 450 - 500 °C (840 - 930 °F) anzustreben, und die Temperatur von der getrockneten Mischung bei dem Ausgang sollte 110 -115 °C (230 - 240 °F) nicht übersteigen.

5. Das Verfahren nach Anspruch 1, wobei in Schritt 1.6 die erste Stufe der Pyrolyse ausgeführt wird bei Temperatur von 220 - 250 °C (430 - 480 °F) und die zweite Stufe - bei Temperatur von 450 - 500 °C (840 - 930 °F).

6. Das Verfahren nach Anspruch 1, wobei in Schritt 1.7 der organische Hochtemperaturwärmeträger, beispielsweise basierend auf Ethylenglykol, erhitzt wird auf Temperaturen von nicht weniger als 150 -160 °C (300 - 320 °F).

7. Das Verfahren nach Anspruch 1, wobei in Schritt 1.8 die Temperatur der Luft, die die leichten organischen Substanzen von einer Wasserphase Wegblasen wird, 105 - 110 °C (220 - 230 °F) ist und der Luftverbrauch ist 5 - 6% der gesamten Luft, die in die Verbrennungskammer gestrahlt wird.

8. Das Verfahren nach Anspruch 1, wobei in Schritt 1.9 das optimale Verhältnis von Auswaschwasser zu festem Pyrolyserest 2:1 ist, Dauer der Auswaschung bei Temperatur des Wassers von 80 °C (175 °F) ist 1 - 1,5 Stunden.

9. Das Verfahren nach Anspruch 1, wobei in Schritt 1.10 Feuchtigkeit des festen Restes, der nach einer Zentrifugierung mit der heißen Schlacke gemischt wird, die eine Temperatur von 1150 - 1200 °C (2100 - 2190 °F) hat, 6 - 15 % ist.

10. Das Verfahren nach Anspruch 1, wobei in Schritt 1.11 mit dem Zweck der Reduktion von Stickoxidemission arbeitet die Verbrennungskammer nach drei-stufigem Verbrennungsverfahren, während das Volumen der Kammer bedingt von der Höhe in eine Brennzone der festen ausgewaschenen Reste der Pyrolyse auf einer Kettenrostfeuerung, einer Zone von sekundärem Brennen, während die Brenner zum Verbrennen flüssiger und gasförmiger Pyrolyseprodukte mit einem Mangel an zugeführter Luft arbeiteten, folglich Produkte unvollständiger Verbrennung, die als Gasreduktor dienen für Stickoxid zu molekularem Stickstoff (N2) und eine Zone von tertiärem Brennen - Nachbrennen von Produkten, die bei der unvollständigen Verbrennung von der zweiten Zone entstanden sind, und als scharfes Strahlen wird Luft verwendet, die in einem Schlackenkühler bis zu Temperatur von 260 - 270 °C (500 - 520 °F) aufgeheizt wurde, die gleichzeitig Nachbrennen bereitstellt von aufgrund von Sauerstoffmangel in dem Ofen gebildeten Kohlenmonoxid (CO) auf Kohlendioxid (CO2).

11. Das Verfahren nach Anspruch 1, wobei in Schritt 1.11 das Brennen bei Temperatur durchgeführt wird, die nicht höher ist als 1250 °C (2280 °F), daher Abnahme der Temperatur der erhaltenen Rauchgase aufgrund von Nutzung von Hitze wird durchweg durchgeführt bei Pyrolyse im Punkt 1.6 vornehmlich bis zu 620 - 650 °C (1150 - 1200 °F), Heizen von Luft für die erste Trocknungsstufe der Pyrolysemischung in Schritt 1.5 vornehmlich bis zu 450 - 470 °C (840 - 880 °F), Aufnehmen des mit Feuchtigkeit gesättigten Niederdruckdampfes in Schritt 1.12 vornehmlich bis zu 350 - 400 °C (660 - 750 °F) und Trocknen von Kalziumchlorid in Schritt 1.13 vornehmlich bis zu 110 °C (230 °F).

12. Das Verfahren nach Anspruch 1, wobei in Schritt 1.13 Aufnehmen von Waschwasser zum Herstellen von Kalziumchlorid circa 25 % des Gesamtverbrauches ausmacht.

13. Das Verfahren nach Anspruch 1, wobei in Schritt 1.14 Kühlen von Schlacke in drei Stufen ausgeführt wird: durch die Luft herunter auf Temperatur von 200 °C (390 °F), durch die Lösung von Kalziumchlorid auf 70 °C (160 °F) und durch Umwälzwasser von dem Kühlturm auf 25 - 30 °C (80 - 90 °F), dadurch wird die Luft auf bis zu 260 - 270 °C (500 - 520 °F) aufgeheizt.

14. Das Verfahren nach Anspruch1, wobei in Schritt 1.15 die thermohumide Verarbeitung von Schlackenbeton Produkten wird wie folgt ausgeführt: Erhöhen der Temperatur auf 80 - 85 °C (175 - 185 °F) innerhalb von 2 - 3 Stunden, isothermes Nachbehandeln von Beton bei 80 - 85 °C (175 - 185 °F) - 4 Stunden und Abkühlen 2 - 3 Stunden und abhängig von Zusammensetzung des Betons kann der Zyklus der thermohumiden Behandlung einfach über einen weiten Bereich angepasst werden. Der Arbeitsstoff sind feuchte Rauchgase nach Trocknen des Kalziumchlorids, die 100 % relative Luftfeuchtigkeit erreichen aufgrund von Einspeisen des mit Feuchtigkeit gesättigten Niederdruckdampfes.

15. Eine Anlage zum Verarbeiten von Abfällen, umfassend die Schritte von:
15.1 Ein Trockner mit Wärmeübertragungsoberfläche ausgestattet mit einem Gehäuse für den Wärmetransport, innenliegender Welle mit Schaufeln, die an einer Schraubenlinie befestigt sind zum Mischen, Bewegen und Verfestigen der Pyrolysemischung, die Trommelförderer sind an Einlass und Auslass des aufgeführten Mischung installiert, ein zusätzliches Abzweigrohr mit dem Drosselschieber zur Eingabe von Säureteeren, verbunden durch System von Rohrleitungen von dem Teil eines Dampfausganges mit Kondensatoreinrichtung, ein Eingang des Wärmeträgers - mit dem Luftheizer, der in Schornstein der finalen Rauchgase einer Anlage installiert ist, und von dem Teil von einem Ausgang- mit dem Lüfter, der Luft zuführt in einen Gaswäscher zum Wegblasen eines Kondensats von einer Verunreinigung der organischer Substanzen und dem Schlackenkühler, der sich unterhalb der Verbrennungskammer befindet;
15.2 eine Kondensatoreinrichtung für Dampf von einem Trockner, ausgestattet mit dem Kondensator, dem Lüfter, dem Tank von einem Kondensat und der Kondensatentfernungspumpe verbunden durch System von Rohrleitungen an dem Teil eines Dampfeinganges mit einem Trockner, einem Ausgang des Kondensats - mit einem Gaswäscher, um ein Kondensat von einer Verunreinigung der organischen Substanzen durch Luft wegzublasen, die nach Erhitzen von einem Trockner kommt, und einem Ausgang von nichtkondensierten Gasen durch den Lüfter mit Brennern der Verbrennungskammer;
15.3 ein Mischungstrockner ausgestattet mit parallelen, horizontalen Wellen mit Rotationsgeschwindigkeitsregler und Schaufeln, die an der Schraubenlinie befestigt sind, ausführend finale Trocknung der aufgeführten Pyrolysemischung aufgrund von Mischen mit einem Teil des festen Restes der Pyrolyse und verbunden durch die Rohrleitung mit einem Trommelförderer an dem Teil von einem Eingang der festen Reste der Pyrolyse mit dem Pyrolyseofen, System von Rohrleitungen für Pyrolysemischung an dem Teil von einem Eingang mit einem Trockner, an dem Teil von einem Ausgang der getrockneten Mischung mit Neutralisator, an einem Teil des Dampfausganges- mit dem Kondensator und einem Entnahmegerät, und nichtkondensierte Gase - durch den Lüfter mit Brennern der Verbrennungskammer;
15.4 eine Einrichtung zum Waschen des anderen Teils der festen Reste der Pyrolyse, die den rotierenden Ofen verlassen, ausgestattet mit dem Entnahmegerät, dessen Körper gelagert ist auf Abzweigrohren von Eingang und Ausgang des festen Restes der Pyrolyse und Waschwassers, Dampfausgang und ein Eingang von einem Kondensat, eine innenliegende Welle mit Schaufeln befestigt auf einer Schraubenlinie zum Mischen und Bewegen von einem Produkt zu einem Gegenstrom von kommendem Waschwasser und einem rotierenden Gerät für ein Entladen der gewaschenen Reste der Pyrolyse, Pumpen, der Kondensator, der Lüfter und eine Absetzzentrifuge mit einem automatischen Entladen der Ablagerung verbunden mit System von Rohrleitungen derart, dass ein Eingang der Reste der Pyrolyse des Entnahmegeräts durch einen Trommelförderer mit dem Pyrolyseofen verbunden ist, und an einem Ausgang - mit einer Zentrifuge, an einem Dampfausgang - mit dem Kondensator, von dem das Kondensat zurück in ein Entnahmegerät kommt, und nichtkondensierte Gase durch den Lüfter in die Brenner der Verbrennungskammer bewegt werden, und die Zentrifuge über Filtrationsleitung durch die Pumpe und Wärmeaustauscher durchweg verbunden ist mit Einrichtung zum Reinigen von Flüssigkeiten von Schwermetallen und mit einem Entnahmegerät, und über Ablagerungsleitung - mit dem Mischungstrockner, der unter einem Ofen installiert ist;
15.5 ein Neutralisator ausgestattet mit Abzweigrohren für einem Ausgang von Pyrolysegasen, einem Gehäuse zum Zuführen von heißer Luft und die Welle gebildet im Inneren mit Schaufeln, die auf einer Schraubenlinie befestigt sind, die erste Stufe der Pyrolyse bereitstellend mit gleichzeitiger Neutralisierung von Chlorwasserstoff und Aufnehmen des Kalziumchlorids verbunden an dem Teil von einem Eingang der Pyrolysemischung mit dem Mischungstrockner, an einem Ausgang - durch Höhenförderer und Schraubenförderer mit dem rotierenden Pyrolyseofen, und Abzweigrohre von einem Ausgang des Pyrolysegases durch System von Rohrleitungen sind über den Lüfter mit dem Pyrolyseofen verbunden und Abzweigrohre von einem Gehäuse an einen Lufteinlass sind verbunden mit dem drückenden Lüfter und an einem Ausgang - mit einem Schlackenkühler;
15.6 ein Pyrolyseofen der organischen Produkte, die in der Pyrolysemischung enthalten sind, ausgestatte mit einer rotierenden Trommel mit externer Heizung durch die Rauchgase der Verbrennungskammer, außenliegende und innenliegende Verrippungsoberflächen, bewegungsloses Laden und Entladen der Endflächen, die an dem Teil eines Ausgangs verbunden sind mit einem Schraubenförderer einer Mischung und mit einem drückenden Lüfter von Pyrolysegasen des Neutralisators, an einem Ausgang von den festen Resten der Pyrolyse durch Trommelförderer mit dem Mischungstrockner und einem Entnahmegerät, darüber hinaus an einem Ausgang der Rauchgase und Pyrolysegas mit den Fliehkraftabscheidern verbunden an einem Ausgang eines Staubproduktes mit einem aufgeführten Schraubenförderer verbunden ist;
15.7 eine Verbrennkammer verblockt mit dem Pyrolyseofen, die unterhalb des aufgeführten Ofens angebracht ist und ausgestattet ist mit einer bewegenden Kettenrostfeuerung zum Verbrennen der ausgewaschenen festen Reste der Pyrolyse, die Brenner angebracht oberhalb einer Stabrostoberfläche zum Verbrennen von flüssigen und gasförmigen Pyrolyseprodukten und nichtkondensierten Gasen, bei Anlaufen von einer Anlage - befinden sich Reservekraftstoff und auch Luftdüsen des scharfen Strömens oberhalb der Brenner;
15.8 eine Kondensatoreinrichtung des Pyrolysegases ausgestattet mit und verbunden durch das System der Rohrleitungen dem Fliehkraftabscheider, dem Wärmetauscher zum Erhitzen des organischen Hochtemperaturwärmeträger, dem röhrenförmigen Kondensator, dem Gaswäscher-Chemisorber, dem abgetrennten Behälter, dem röhrenförmigen Wärmetauscher zum Abkühlen von Kondensat, der Umwälzpumpe, den Sammeltanks für Wasserphase und organischen Kraftstoff, dem Kartuschenfilter, der Pumpe zum Zuführen einer Wasserphase in einen Gaswäscher, um organische Verunreinigungen wegzublasen, der Pumpe zum Zuführen von flüssigem, organischem Kraftstoff in Brenner der Brennkammer und einem Lager an fertigen Gütern, dem Lüfter zum Zuführen nichtkondensierter Gasen in Brenner der Verbrennungskammer, und zum Neutralisieren von Säureverunreinigungen bei Verletzung einer technischen Betriebsweise vorweggenommener Einrichtung eines Tanks mit einem Mischer und der Dosierpumpe für Neutralisierungslösung;
15.9 Eine Anlage zum Wegblasen von Wasserphase von kondensierter Pyrolyseprodukte von den organischen Verunreinigungen, ausgestattet mit einem Gaswäscher gefüllt mit aufgesetzten Ringen, der Pumpe und den Lüftern, die durch System von Rohrleitungen verbunden an einem Eingang von heißer Luft durch den Lüfter mit einem Trockner, an einen Ausgang durch den Lüfter mit einem Schlackenkühler, an einen Eingang von einer Wasserphase mit Kondensatoreinrichtung von einem Pyrolysegas und an einem Ausgang durch die Pumpe mit einem Entnahmegerät;
15.10 Eine Einrichtung zur Nutzung von Hitze der finalen Rauchgase ausgestattet mit durchweg mit dem Schornstein verbunden einem Fliehkraftabscheider, Lufterhitzer mit dem Lüfter zur Luftzuführung, Entlüfter und Abhitzekessel zum Erzeugen von mit Feuchtigkeit gesättigtem Niederdruckdampf, verbunden an dem Eingang der Rauchgase mit dem Pyrolyseofen und an dem Ausgang mit der Einrichtung zum Aufnehmen von Kalziumchlorid, und der Fliehkraftabscheider ist an einem Ausgang von einem Staub verbunden mit einem Schraubenförderer von dem Pyrolyseofen, Lufterhitzer ist an dem Eingang von Luft durch den Lüfter verbunden mit einem Vorbereitungsplatz der Abfallprodukte, an dem Ausgang mit einem Trockner, und der Abhitzekessel ist verbunden durch eine Dampfleitung mit der Kammer der thermohumiden Bearbeiten des Schlackenbetons;
15.11 eine Einrichtung zum Zuführen von dem mit Feuchtigkeit gesättigten Dampf in die Kammer der thermohumiden Bearbeitung des Schlackenbetons ersetzend im Falle von Komplexität durch eine Auswahl von in Serie gefertigten Abhitzekessel von benötigter Produktivität und ausgestattet mit dem elektrischen Dampfkessel verbunden durch das System von Rohrleitungen an den Eingang von einem Kondensat und einen Ausgang von Dampf mit der aufgeführten Kammer zum Bearbeiten von Schlackenbeton und dem Lüfter verbunden an dem Eingang des Dampfes mit Rohrleitungen für Dampf des Mischungstrockners und dem Entnahmegerät und an dem Ausgang des Dampfes - mit der aufgeführten Kammer zum Bearbeiten des Schlackenbetons;
15.12 Eine Einrichtung zum Herstellen des Kalziumchlorids ausgestattet mit einer Düse und einem Schraubentrockner, einem Schraubenkühler, Entlüfter und einem Fliehkraftabscheider verbunden durch System der Rohrleitungen in einer Weise, dass Trocknen einer Lösung von Kalziumchlorid durchgeführt wird aufgrund von Nutzung von Hitze der finalen Rauchgase in zwei Stufen: am Anfang in einer Düse und dann in einem Schraubentrockner mit dem anschließenden Kühlen in einem Schraubenkühler, und der Verbrauch der Rauchgase, zugeführt durch den Entlüfter gleichzeitig in einen Düsentrockner und einen Schraubentrockner wird automatisch unterstützt durch System des Verhältnisses der blockierten Ströme, und die finalen feuchten Gase werden frei aus Tropfen von einer Lösung in einem Fliehkraftabscheider und bewegen sich in der Einrichtung zum Aufnehmen des Kohlendioxids und zu der Kammer der thermohumiden Behandlung von Schlackenbeton;
15.13 Eine Einrichtung zum Aufnehmen von Kohlendioxid aus den Rauchgasen ausgestattet mit der Ausrüstung, die eine Verfahren verwendet zur Aufnahme von Kohlendioxid mit der Hilfe von dem Monoethanolamin, verbunden durch System von Rohrleitungen an dem Eingang von dem Heizmittel mit dem Wärmetauscher zum Heizen von dem organischen Hochtemperaturwärmeträger, der Gaswäscher - Kühler der Rauchgase vor einem Absorber der Einrichtung ist angeschlossen durch Kondensatleitung mit Kühlturm der Anlage und der Entlüfter der finalen Gase - mit dem Schornstein der finalen Rauchgase von einer Anlage und einem Schornstein;
15.14 Ein Mischungstrockner der gewaschenen und gefilterten festen Rest der Pyrolyse ausgestattet mit paralleler horizontaler Welle mit Schaufeln, die auf der Schraubenlinie angeordneten sind, ausführend Trocknen der aufgeführten Reste der Pyrolyse aufgrund von Mischen mit anderem Teil der heißen Schlacke von Verbrennungskammer und verbunden an dem Eingang mit einer Zentrifuge und durch das Tor mit der Verbrennungskammer und an dem Ausgang durch einen Höhenförderer und einem Schraubenförderer mit dem Einfülltrichter von einer Verbrennungskammer, einen Dampfausgang - mit dem Kondensator und einem Entnahmegerät und nichtkondensierte Gase durch den Lüfter - mit Brennern der Verbrennungskammer;
15.15 Eine Einrichtung zum Kühlen der Schlacke ausgestattet mit dem rotierenden Trommelkühler von Schlacke, dessen Eingangsteil abgedichtet ist durch den feuerfesten Ziegel und verbunden durch das Tor zur Verbrennungskammer, anderer Teil der Trommel hat innenliegende Düsen und Stahl oder Keramikkugeln zum Schaufeln und Zerkleinern von Schlacke, das Räumer-Förderband angebracht in dem Gehäuse, das Oberflächen zum Kühlen hat, und der Einfülltrichter der gekühlten Schlacke und der Trommelkühler in einem Gegenstrom zur Bewegung von Schlacke ist verbunden an einem Eingang von Luft durch den Lüfter mit dem Trockner, an einen Ausgang durch den Fliehkraftabscheider mit dem drückenden Lüfter, Oberflächen zum Kühlen der Förderband sind verbunden mit der Rohrleitung von der Kalziumchloridlösung gereinigt von Schwermetallen und mit Umwälzsystem von Kühlturm und dem Einfülltrichter der gekühlten Schlacke - mit einem Lagerhaus von Industriegütern und mit Einrichtung zum Aufnehmen von einem Schlackenbeton;
15.16eine Einrichtung zum Aufnehmen von Schlackenbetonprodukten ausgestattet mit einem Betonmischer zum Aufnehmen von einer Betonmischung von benötigter Zusammensetzung, eine Vibrationsplattform zum Modellieren und Verdichten der aufgeführten Mischung, Entlüfter, eine Pumpe zum Entfernen von Kondensat und die Kammer zum thermohumiden Behandeln verbunden durch System von Rohrleitungen an einem Eingang von dem Wärmeträger mit Einrichtungen zum Aufnehmen von Kalziumchlorid und der Abhitzekessel, an einem Ausgang durch Entlüfter mit Schornstein der finalen Rauchgase von einer Anlage und einem Schornstein, und an einem Ausgang von einem Kondensat - durch einen Pumpe zum Entfernen von Kondensat mit einem Umwälzsystem von Wasserversorgung von Kühlturm und einem Entnahmegerät.

## Revendications

1. Procédé de traitement de déchets, comprenant les étapes suivantes :
1.1 élimination d'objets de déchet solides de grandes dimensions qui ne peuvent pas être broyés;
1.2 élimination de métaux ferreux, d'aluminium et de verre par des procédés connus, si les conditions locales et des raisons économiques le nécessitent, bien que la technologie elle-même ne l'exige pas;
1.3 broyage de rebuts et de calcaire, en mélangeant les déchets solides broyés mentionnés avec de la poudre de calcaire pour constituer un mélange de pyrolyse dans le rapport de poids dépendant des teneurs, dans les déchets, en substances capables de réagir avec le calcaire et de l'utilisation ultérieure du laitier reçu;
1.4 en cas de traitement conjoint de rebuts avec les déchets contenant des substances capables de réagir avec le calcaire, avec émission des produits de réaction dans un environnement, par exemple avec déplacement de goudrons acides pour un traitement direct dans la première phase de séchage;
1.5 séchage en deux phases du mélange de pyrolyse précité - au début par l'air chaud qui a été chauffé suite à l'utilisation de la chaleur des gaz de cheminée finaux, puis par le mélange avec une partie du résidu solide chaud de la pyrolyse évacué du four de pyrolyse rotatif;
1.6 pyrolyse à deux étages, sans accès d'air du mélange de pyrolyse précité, au début par mélange avec une partie du résidu solide chaud de la pyrolyse évacué du four de pyrolyse, avec neutralisation simultanée par une poudre de calcaire de chlorure d'hydrogène affecté et réception de chlorure de calcium, puis passage du mélange pyrolytique déchloré et du gaz pyrolytique reçu du premier étage, le long d'un tambour rotatif du four, dans une direction, en vue de la pyrolyse finale, avec réception du gaz pyrolytique et des résidus solides de la pyrolyse suite au chauffage par des gaz de cheminée de la chambre de combustion;
1.7 chauffage, par des gaz de pyrolyse, du vecteur thermique organique à haute température, par exemple basé sur de l'éthylèneglycol, utilisé ensuite comme agent chauffant à réception de dioxyde de carbone à partir des gaz de cheminée finaux;
1.8 condensation de gaz de pyrolyse, avec division subséquente en une phase aqueuse séparée des impuretés organiques par de l'air chaud, après séchage par celui-ci de déchets solides, et une phase organique utilisée comme combustible commercial et combustible pour les besoins propres;
1.9 lavage de l'autre partie des résidus solides de la pyrolyse évacués du four de pyrolyse rotatif avec la phase aqueuse précitée d'un condensat de gaz pyrolytiques pour la dissolution du chlorure de calcium et l'extraction d'ions de métaux, y compris radioactifs, des pores des particules solides des produits de déchets, avec affectation subséquente de métaux lourds en tant que produits utiles, par exemple par adsorption sur du charbon ou du coke, puis par électrocoagulation;
1.10 centrifugation des résidus de pyrolyse solides lavés, avec déplacement du filtrat reçu pour extraire des ions de métaux lourds des produits de déchets et des résidus solides, en vue du séchage par mélange avec une partie du laitier chaud quittant la chambre de combustion;
1.11 combustion des résidus de pyrolyse solides lavés, des produits de pyrolyse gazeux et liquides et des gaz non condensés, postcombustion de monoxyde de carbone (CO) jusqu'à formation de dioxyde de carbone (CO2) avec réception de laitier et de gaz de cheminée, utilisation thermique subséquente des gaz et du laitier précités et pour d'autres processus technologiques;
1.12 réception de la vapeur saturée humide basse pression suite à l'utilisation thermique des gaz de cheminée finaux ou utilisation de la vapeur d'un mélangeur-sécheur et d'un extracteur pour finir l'humidité relative des gaz de cheminée en vue d'un traitement thermique humide des produits de béton de laitier jusqu'à 100%;
1.13 élimination constante d'une partie de l'eau de lavage débarrassée des métaux lourds (une phase liquide) pour la réception de chlorure de calcium sec suite au séchage par des gaz de cheminée finaux;
1. 14 refroidissement du laitier et envoi à son consommateur ou pour la fabrication de produits de béton de laitier;
1.15 traitement thermique humide de produits de béton de laitier par des gaz de cheminée finaux humides, après séchage de chlorure de calcium dans un mélange avec de la vapeur saturée humide à basse pression.

2. Procédé selon la revendication 1, selon lequel à l'étape 1.3 d'envoi direct du laitier refroidi au consommateur, le rapport de poids du calcaire aux déchets solides est de 1:5 à 1:20, en fonction de la teneur en chlore dans les déchets solides, le traitement de déchets solides conjointement avec des goudrons acides fournissant en plus du calcaire en une quantité qui dépend de la teneur en acide sulfurique dans les goudrons et, dans le cas où le laitier est utilisé pour fabriquer des produits de béton de laitier, fournissant en plus du calcaire en une quantité qui dépend d'un compoundage d'un mélange de béton.

3. Procédé selon la revendication 1, selon lequel à l'étape 1.4 le rapport de poids optimal de produits de déchets avec les goudrons acides est de 5:1 à 10:1, en fonction de la teneur en acide sulfurique des goudrons.

4. Procédé selon la revendication 1, selon lequel à l'étape 1.5 la première phase de séchage est exécutée par de l'air qui a été chauffé jusqu'à 250-260 C° (480-500 °F), dont la consommation est définie par les besoins du processus de combustion dans la chambre de combustion, et la deuxième phase - suite à l'utilisation de chaleur d'une partie du résidu solide de la pyrolyse - est effectuée pour le mélange à une température de 450-500 °C (840-930 °F), et la température du mélange séché à la sortie ne devrait pas dépasser 110-115 °C (230-240 °F).

5. Procédé selon la revendication 1, selon lequel à l'étape 1.6 la première phase de pyrolyse est exécutée à une température de 220-250 °C (430-480 °F), et la deuxième phase est exécutée à une température de 450-500 °C (840-930 °F).

6. Procédé selon la revendication 1, selon lequel à l'étape 1.7 le vecteur thermique organique à haute température, basé par exemple sur de l'éthylèneglycol, est chauffé jusqu'à une température qui n'est pas inférieure à 150-160 °C (300-320 °F).

7. Procédé selon la revendication 1, selon lequel à l'étape 1.8 la température de l'air qui est soufflé pour éliminer les substances organiques légères d'une phase aqueuse est de 105-110 °C (220-230 °F), et la consommation d'air est de 5-6 % de la totalité de l'air soufflé dans la chambre de combustion.

8. Procédé selon la revendication 1, selon lequel à l'étape 1.9 le rapport optimal de l'eau d'extraction au résidu solide de pyrolyse est de 2:1, et la durée de l'extraction à la température de l'eau de 80 °C (175 °F) est de 1-1,5 heures.

9. Procédé selon la revendication 1, selon lequel à l'étape 1.10 l'humidité du résidu solide, après un passage en centrifugeuse pour un mélange avec le laitier chaud qui présente une température de 1150-1200 °C (2100-2190 °F), est de 6-15%.

10. Procédé selon la revendication 1, selon lequel à l'étape 1.11, dans le but de diminuer les émissions d'oxydes d'azote, la chambre de combustion fonctionne selon un procédé de combustion à trois étages, lorsque le volume de la chambre est partagé conditionnellement en hauteur en une zone de combustion des résidus de pyrolyse solides lavés, sur un foyer à grille mécanique, une zone de combustion secondaire lorsque les brûleurs pour brûler des produits de pyrolyse liquides et gazeux fonctionnent avec un manque d'air d'apport et donnent des produits à combustion incomplète qui servent de réducteur gazeux d'oxydes d'azote (NO) pour obtenir de l'azote moléculaire (N2), et une zone de combustion tertiaire où a lieu la postcombustion de produits à combustion incomplète de la deuxième zone, et on utilise pour le soufflage vif de l'air qui a été chauffé dans un refroidisseur de laitier, jusqu'à une température de 260-270 °C (500-520 °F) qui réalise simultanément la postcombustion de monoxyde de carbone (CO), formé à cause du manque d'oxygène dans le four de pyrolyse, pour obtenir du dioxyde de carbone (CO2).

11. Procédé selon la revendication 1, selon lequel à l'étape 1.11 la combustion est effectuée à une température ne dépassant pas 1250 °C (2280 °F), et ainsi la diminution de la température des gaz de cheminée reçus, suite à l'utilisation de la chaleur, est effectuée de façon régulière en pyrolyse au point 1.6, principalement jusqu'à 620-650 °C (1150-1200 °F), le chauffage de l'air pour la première phase de séchage du mélange de pyrolyse à l'étape 1.5 est effectué essentiellement jusqu'à 450-470 °C (840-880 °F), la réception de la vapeur saturée humide basse pression à l'étape 1.12 est effectuée essentiellement jusqu'à 350-400 °C (660-750 °F), et le séchage du chlorure de calcium à l'étape 1.13 est effectué principalement jusqu'à 110 °C (230 °F).

12. Procédé selon la revendication 1, selon lequel à l'étape 1.13 l'admission d'eau de lavage pour la fabrication de chlorure de calcium représente environ 25 % de la consommation générale.

13. Procédé selon la revendication 1, selon lequel à l'étape 1.14 le refroidissement du laitier est effectué en trois phases : par l'air, pour descendre à une température de 200 °C (390 °F), par la solution de chlorure de calcium, jusqu'à 70 °C (160 °F), et par l'eau de retour de la tour de refroidissement à 25-30 °C (80-90 °F), et ainsi l'air est chauffé à 260-270 °C (500-520 °F).

14. Procédé selon la revendication 1, selon lequel à l'étape 1.15 le traitement thermique humide de produits de béton de laitier est effectué de la manière suivante : augmentation de température jusqu'à 80-85 °C (175-185 °F) en 2-3 heures, durcissement thermique du béton à 80-85 °C (175-185 °F) en 4 heures et refroidissement en 2-3 heures et, en fonction de la composition du béton, le cycle de traitement thermique humide peut être réglé facilement sur une grande plage. L'agent actif est constitué des gaz de cheminée humides après séchage du chlorure de calcium, atteignant 100 % avec une humidité relative due à l'injection de la vapeur saturée humide à basse pression.

15. Installation de traitement de déchets comprenant les étapes suivantes :
15.1 un sécheur avec une surface de transfert thermique, comprenant une gaine pour le vecteur thermique, un arbre interne avec des pales montées sur une vis pour mélanger, déplacer et stabiliser le mélange de pyrolyse, les alimentateurs à tambour installés à l'entrée et à la sortie du mélange précité, un tuyau d'embranchement supplémentaire avec le clapet de régulation pour apporter des goudrons acides, raccordés par un système de canalisations depuis une sortie de vapeur avec un agencement de condenseur, une entrée du vecteur thermique - le réchauffeur d'air étant placé dans la cheminée des gaz finaux d'une installation, et depuis une sortie - le ventilateur envoyant de l'air dans un épurateur pour éliminer par soufflage un condensat d'une impureté des substances organiques, et le refroidisseur de laitier étant situé sous la chambre de combustion;
15.2 un agencement de condenseur pour la vapeur d'un sécheur, comprenant le condenseur, le ventilateur, le réservoir de condensat et la pompe d'évacuation de condensat raccordés par un système de canalisations depuis une entrée de vapeur d'un sécheur, une sortie de condensat - avec un épurateur pour éliminer par soufflage un condensat d'impuretés de substances organiques, avec de l'air arrivant après chauffage d'un sécheur, et une sortie de gaz non condensés, via le ventilateur, avec les brûleurs de la chambre de combustion;
15.3 un mélangeur-sécheur comprenant des arbres horizontaux parallèles, avec un régulateur de vitesse de rotation et des pales montées sur la vis effectuant le séchage final du mélange de pyrolyse précité, par mélange avec une partie des résidus de pyrolyse solides, et raccordé par la canalisation à un alimentateur à tambour côté entrée des résidus de pyrolyse solides avec le four de pyrolyse, au système de canalisations pour le mélange de pyrolyse côté entrée avec un sécheur, côté sortie du mélange séché avec un neutraliseur, côté sortie de vapeur - avec le condenseur et un extracteur et les gaz non condensés - via le ventilateur avec les brûleurs de la chambre de combustion;
15.4 un agencement pour laver l'autre partie des résidus de pyrolyse solides quittant le four de pyrolyse rotatif, comprenant l'extracteur dont le corps se trouve sur un tuyau d'embranchement d'entrée et de sortie du résidu de pyrolyse solide et d'eau de lavage, la sortie de vapeur et d'entrée d'un condensat, un arbre interne avec des pales montées sur une vis pour mélanger et déplacer un produit vers un contrecourant d'arrivée d'eau de lavage, et un dispositif rotatif pour décharger les résidus de pyrolyse lavés, des pompes, le condenseur, le ventilateur et une centrifugeuse par décantation avec déchargement automatique du dépôt, raccordés par un système de canalisations, de sorte que l'extracteur sur une entrée des résidus de pyrolyse est raccordé via un alimentateur à tambour au four de pyrolyse, et sur une sortie - avec une centrifugeuse, sur une sortie de vapeur - au condenseur dont le condensat retourne de nouveau dans un extracteur, et les gaz non condensés par le ventilateur passent dans les brûleurs de la chambre de combustion, et la centrifugeuse, via la conduite de filtrat passant par la pompe et l'échangeur de chaleur, est raccordée en conséquence à un agencement pour débarrasser des liquides des métaux lourds, et à un extracteur, et via une conduite de dépôt - avec le mélangeur-sécheur installé sous un four;
15.5 un neutraliseur comprenant des tuyaux d'embranchement pour une sortie de gaz de pyrolyse, un gaine d'alimentation en air chaud et l'arbre monté à l'intérieur, avec des pales montées sur la vis, constituant le premier étage de pyrolyse, avec neutralisation simultanée de chlorure d'hydrogène et réception du chlorure de calcium, raccordé à une entrée de mélange de pyrolyse avec le mélangeur-sécheur, à une sortie - via un élévateur et un alimentateur à vis - avec le four de pyrolyse rotatif, et des tuyaux d'embranchement d'une sortie de gaz pyrolytique par un système de canalisations passant par le ventilateur sont raccordés au four de pyrolyse, des tuyaux d'embranchement d'une gaine sur une entrée d'air sont raccordés au ventilateur soufflant et sur une sortie - à un refroidisseur de laitier;
15.6 un four de pyrolyse des produits organiques contenus dans le mélange de pyrolyse apporté, comprenant un tambour rotatif avec chauffage externe par des gaz de cheminée de la chambre de combustion, des surfaces à nervures externes et internes, chargeant et déchargeant sans mouvement les faces d'extrémités raccordées à une entrée avec un alimentateur à vis d'un mélange et avec un ventilateur soufflant de gaz de pyrolyse depuis le neutraliseur, à une sortie des résidus de pyrolyse solides à travers des alimentateurs à tambour avec le mélangeur-sécheur et un extracteur, et en outre à une sortie de gaz de cheminée et de gaz de pyrolyse avec les cyclones raccordés à une sortie de poussière d'un produit avec un alimentateur à vis précité;
15.7 une chambre de combustion groupée avec le four de pyrolyse, située sous le four précité et comprenant un foyer à grille mécanique mobile pour brûler les résidus de pyrolyse solides lavés, les brûleurs situés au-dessus d'une surface de barreaux de grille pour brûler des produits de pyrolyse liquides et gazeux et les gaz non condensés, pendant le démarrage d'une installation - du combustible de réserve et également des tuyères à air du soufflage vif, situés au-dessus des brûleurs;
15.8 un agencement de condenseur du gaz pyrolytique, comprenant, raccordés par le système de canalisations, le cyclone, l'échangeur de chaleur pour chauffer le vecteur thermique organique à haute température, le condenseur tubulaire, l'épurateur-adsorbeur chimique, la cuve séparée, l'échangeur de chaleur tubulaire pour le refroidissement du condensat, la pompe de circulation, les réservoirs de collecte de la phase aqueuse et du combustible organique, les filtres à cartouche, la pompe d'alimentation d'une phase aqueuse dans un épurateur pour éliminer par soufflage des impuretés organiques, la pompe d'alimentation en combustible organique liquide des brûleurs de la chambre de combustion, et un lieu de stockage de produits finis, le ventilateur pour envoyer les gaz non condensés dans les brûleurs de la chambre de combustion et, en cas de non application d'un mode technologique pour la neutralisation d'impuretés acides, installation anticipée d'un réservoir avec un mélangeur, et la pompe de dosage de la solution de neutralisation;
15.9 un agencement pour éliminer par soufflage la phase aqueuse de la pyrolyse de produits condensés, contenue dans les impuretés organiques, comprenant un épurateur rempli d'anneaux, la pompe et les ventilateurs raccordés par un système de canalisations à une entrée d'air chaud, via le ventilateur, avec un sécheur, à une sortie, via le ventilateur, avec un refroidisseur de laitier, à une entrée d'une phase aqueuse avec l'agencement de condenseur d'un gaz pyrolytique, et à une sortie, via la pompe, avec un extracteur;
15.10 un agencement pour l'utilisation thermique des gaz de cheminée finaux, comprenant, dans un raccordement avec la cheminée, un cyclone, un réchauffeur d'air avec le ventilateur pour l'alimentation en air, l'extracteur et la chaudière à récupération de chaleur pour la production de vapeur saturée humide basse pression, raccordée à l'entrée des gaz de cheminée avec le four de pyrolyse, et à la sortie avec l'agencement pour recevoir le chlorure de calcium, et le cyclone, à une sortie de poussière, est raccordé à un alimentateur à vis du four de pyrolyse, le réchauffeur d'air, à l'entrée de l'air via le ventilateur, est raccordé à un lieu de préparation des déchets, à la sortie avec un sécheur, et la chaudière à récupération de chaleur est raccordée par une conduite de vapeur à la chambre de traitement thermique humide de béton de laitier;
15.11 un agencement d'alimentation de la vapeur saturée humide dans la chambre de traitement thermique humide du béton de laitier, remplaçant en cas de complexité une sélection de chaudière à récupération de chaleur fabriquée en série, avec la productivité requise, et comprenant la chaudière à vapeur électrique, raccordée par le système de canalisations à l'entrée d'un condensat et à une sortie de vapeur avec la chambre précitée de traitement de béton de laitier, et le ventilateur raccordé à l'entrée de vapeur avec les canalisations pour la vapeur des mélangeurs-sécheurs et un extracteur, et à la sortie de vapeur - avec la chambre précitée de traitement de béton de laitier;
15.12 un agencement pour fabriquer le chlorure de calcium, comprenant des sécheurs à pulvérisation et à vis, un refroidisseur à vis, des extracteurs et un cyclone raccordés par un système de canalisations, de manière à ce que le séchage d'une solution de chlorure de calcium soit effectué par l'utilisation thermique de gaz de cheminée finaux en deux phases : au début dans un sécheur à pulvérisation, puis dans un sécheur à vis, avec refroidissement subséquent dans un refroidisseur à vis, et la consommation des gaz de cheminée apportés par l'extracteur, simultanément dans un sécheur à pulvérisation et un sécheur à vis, est soutenue automatiquement par le système de bloc de rapport de flux, et les gaz humides finaux sont dégagés des gouttes d'une solution dans un cyclone et passent à l'agencement en vue de la réception du dioxyde de carbone et à la chambre de traitement thermique humide de béton de laitier;
15.13 un agencement pour recevoir le dioxyde de carbone des gaz de cheminée, comprenant l'équipement utilisant un procédé de réception de dioxyde de carbone à l'aide du monoéthanolamine, raccordé par un système de canalisations à l'entrée de l'agent chauffant avec l'échangeur de chaleur pour chauffer le vecteur thermique organique à haute température, l'épurateur - le refroidisseur de gaz de cheminée en amont d'un absorbeur de l'agencement est raccordé par un tuyau de condensat à la tour de refroidissement de l'installation et l'extracteur de gaz finaux - avec la cheminée de gaz de cheminée finaux d'une installation et une cheminée;
15.14 un mélangeur-sécheur du résidu de pyrolyse solide lavé et filtré, comprenant un arbre horizontal parallèle avec des pales montées sur la vis effectuant le séchage du résidu de pyrolyse précité, par mélange avec l'autre partie de laitier chaud de la chambre de combustion, et raccordé à l'entrée avec une centrifugeuse, et via le clapet avec la chambre de combustion, et à la sortie, via un élévateur et un alimentateur à vis, avec la trémie d'une chambre de combustion, une sortie de vapeur - avec le condenseur et un extracteur et les gaz non condensés à travers le ventilateur - avec les brûleurs de la chambre de combustion;
15.15 un agencement pour refroidir le laitier, comprenant le refroidisseur de laitier à tambour rotatif, dont la zone d'entrée est revêtue de briques réfractaires et qui est raccordé par le clapet à la chambre de combustion, et l'autre partie du tambour présente des buses internes et des sphères en acier ou en céramique pour agiter et broyer le laitier, le convoyeur à raclettes situé dans le boîtier comportant des surfaces de refroidissement et la trémie de laitier refroidi, et le refroidisseur à tambour, dans un contrecourant au mouvement du laitier, est raccordé par une entrée d'air, via le ventilateur, au sécheur, par une sortie, via le cyclone, au ventilateur soufflant, les surfaces de refroidissement du convoyeur sont raccordées à la canalisation de la solution de chlorure de calcium débarrassée des métaux lourds et au système de retour de la tour de refroidissement et la trémie du laitier refroidi - avec un lieu de stockage de produits fabriqués et avec l'agencement de réception de béton de laitier;
15.16 un agencement de réception de produits de béton de laitier, comprenant un mélangeur de béton destiné à recevoir un mélange de béton avec la composition nécessaire, une plateforme vibrante pour modeler et compacter le mélange précité, des extracteurs, une pompe d'évacuation de condensat et la chambre de traitement thermique humide, raccordés par le système de canalisations à une entrée du vecteur thermique avec l'agencement de réception de chlorure de calcium et la chaudière à récupération de chaleur, à une sortie, via les extracteurs, avec la cheminée de gaz de cheminée finaux d'une installation et une cheminée, et à une sortie d'un condensat - via une pompe d'évacuation de condensat - avec un système de retour d'alimentation en eau de la tour de refroidissement et un extracteur.
